# EUROPEAN PATENT APPLICATION

(11) **EP 1 816 172 A1**
(43) Date of publication of application: **08.08.2007**
(21) Application number: 05793618.9
(22) Date of filing: 14.10.2005
(51) Int. Cl.: C09D 11/00, B41J 2/01, B41M 5/00

(54) **RECORDING LIQUID, LIQUID CARTRIDGE CONTAINING RECORDING LIQUID, AND APPARATUS AND METHOD FOR DISCHARGING LIQUID**

(30) Priority: 25.10.2004 JP 2004309961
(71) Applicant: Sony Corporation, Minato-ku Tokyo (JP)
(72) Inventor: SEKIGUCHI, Hideki, c/o SONY CORPORATION, Minato-ku, Tokyo (JP)
(74) Representative: Müller, Frithjof E.
(86) International application number: PCT/JP2005/018955
(87) International publication number: WO 2006/046418

(57) **Abstract**

Disclosed is a recording liquid for recording an image or a letter/ character used for recording an image or a letter/ character on a recording paper sheet P. The recording liquid contains a dye, a solvent for dissolving or dispersing the dye, at least one of specified ethylene oxide adducts of 2-ethyl-2-butyl-1,3-propanediol and at least one of specified ethylene oxide/ propylene oxide copolymers.

## Description

### Technical Field

This invention relaters to a recording liquid deposited as a liquid droplet on a support for recording, to effect recording thereon, a liquid cartridge holding this recording liquid, and an apparatus and a method for emitting the recording liquid, held in the liquid cartridge, as a liquid droplet, via an emitting port onto a support for recording.

This application claims priority rights based on the JP Patent Application 2004-309961 filed in Japan on October 25, 2004. This Patent Application of senior filing data is incorporated in the present application by reference.

### Background Art

Heretofore, a printer apparatus of the ink jet system, in which the ink as a recording liquid is emitted onto a recording paper sheet, as a recording support, for recording an image or a letter/ character thereon, has been used as a liquid emitting apparatus. This sort of the printer apparatus of the ink jet system has been in use extensively, because the apparatus is low in running cost and lends itself to reduction in size and to printing of a colored image.

Among different ink jet systems for emitting the ink, there are, for example a deflection system, a cavity system, a thermo-jet system, a bubble jet (registered trademark) system, a thermal ink jet system, a slit jet system and a spark jet system. With these ink jet systems, the ink is via an emitting port of an ink emitting head, or a so-called nozzle, for depositing the ink on a recording paper sheet for recording an image or a letter/ character thereon. The ink emitting head emits the ink in the form of fine liquid droplets.

It is required of the ink, used in the printer apparatus of the ink jet system, not to stop up the nozzle via which to emit the ink. The nozzle is stopped up with the ink due to e.g. fine bubbles generated in the ink.

In the ink, there is dissolved a preset amount of a gas, such as air. If solubility for a gas is lowered with rise in temperature, the gas which has not been dissolved is separated to form fine bubbles. In the case of a printer apparatus of the ink jet system, for example, the gas dissolved in the liquid is emitted, with rise in temperature of the ink in the ink emitting head, to generate fine bubbles in the ink.

If these fine bubbles are present in the ink emitting head, there is fear that these bubbles stop up the nozzle to obstruct the ink being emitted from the nozzle or to cause deflection of the ink emitting direction, thus causing emission defects. The result is a blurred printed image or unprinted spots detracting from the quality of the printed image.

In particular, with the thermal system and the bubble jet system, as the ink jet system, the thermal energy is applied to the ink to turn the ink into fine liquid droplets which are then emitted via a nozzle. Specifically, the ink is rapidly heated by a heater as a source of thermal energy, and the so heated ink is emitted as liquid droplets under the pressure of an air bubble generated on film boiling. Thus, in the ink jet system, heat tends to be accumulated in the vicinity of the heater, and hence the ink in the ink emitting head tends to rise acutely in temperature, thus possibly causing the non-emission or emission defects.

The techniques disclosed in, for example, the JP Patent Laid-Open Patent Publications 2001-2964 and H10-46075 have so far been proposed for coping with the above problem. The techniques disclosed in these Publications mix a propylene oxide adduct polymer of a lower alcohol in the aqueous pigment ink. It is however difficult with these techniques to suppress the fine bubbles from being generated in the ink and hence a demand for further improvement is raised.

There is also proposed in the JP Laid-Open Patent Publication H7-70491 an ink containing an ethylene oxide adduct of alkoxylate of a higher secondary alcohol. This ink is taken to be superior in emission stability at the time of high frequency driving, penetration into recording paper sheets and in drying performance. However, with this ink, it is difficult to cope successfully with the problem of nozzle clogging with fine bubbles even in case a compound corresponding to the alkoxylate of higher secondary alcohol added only by ethylene oxide is contained in the ink. Specifically, the ink containing a compound containing only ethylene oxide in an amount of 7 or more mol is subjected to severe bubbling and leads to pronounced nozzle clogging.

Hence, it is required of the ink used for the ink jet system to be not only free from bubbling or from nozzle stop-up but also free from deterioration in the image quality, such as lowered optical density, boundary bleeding or all-over color mixing and speckling, that may be caused on printing on plane paper sheets, such as copy sheets or report pads, or so-called high-quality paper sheets.

For meeting the request, it is proposed in e.g. the JP Laid-Open Patent Publication 2000-154342 to use a dye obtained on treating a water-insoluble dye with a high molecular material containing a sulfonic acid group or a sulfonate group and/or with a high molecular material containing a phosphoric acid group or a phosphate group, and to add a high molecular material containing a carboxylic acid or a carboxylate to the ink.

It is also proposed in the JP Laid-Open Patent Publication H8-290656 to mix an alginic acid having a D-mannuronic acid to L-guluronic acid ratio of 0.5 to 1.2 in the ink.

It is furthermore proposed in the JP Laid-Open Patent Publication H8-193177 to mix at least one surfactant, selected from the group consisting of a fluorine-based surfactant and a silicon-based surfactant, and an alginate, in the ink. However, with the technique disclosed in JP Laid-Open Patent Publication H8-290656 or JP Laid-Open Patent Publication H8-193177, it is difficult to obtain satisfactory results in preventing stop-up of the nozzle or deterioration in the image quality, so that a request for further improvement is raised.

The problem caused by fine bubbles in the ink is presented to a more pronounced extent in a printer apparatus capable of high speed printing for a recording paper sheet, that is, a line printer apparatus having the ink emitting width substantially equal to the width of the recording paper sheet (see for example the JP Laid-Open Patent Publication 2002-36522.

The line printer apparatus differs from a serial printer apparatus in which one or more rows of nozzles are juxtaposed in a direction substantially at right angles to the feed direction of a recording paper sheet, that is, along the width-wise direction of a recording paper sheet, and in which printing is carried out as an ink emitting means is swept in a direction substantially at right angles to the feed direction of the recording paper sheet. The line printer apparatus includes an ink flow duct extending across the feed direction of the recording paper sheet for guiding the ink from an ink tank, and a plural number of ink emitting heads, each provided with large numbers of nozzles, are arranged on one or both sides of the duct. With the line printer apparatus, the number of heaters, each provided to the nozzle, is increased with increase in the number of the nozzles, so that fine bubbles tend to be generated. Moreover, the length of the ink flow duct extending from an ink tank to the emitting means is increased and becomes complex in structure. Hence, the fine bubbles are difficult to remove and inconveniences due to the fine bubbles occur pronouncedly.

With the line printer apparatus, the ink emitting period per each nozzle line provided with large numbers of nozzles is extremely short, so that it becomes necessary to use the ink having high penetrability into the bulk of the recording paper sheet. If, in the line printer apparatus, the ink having high penetrability into the bulk of the recording paper sheet is used for a plane recording paper sheet, the ink tends to be penetrated excessively along the depth-wise direction, that is, along the thickness, of the paper sheet, thus possibly lowering the optical density.

Moreover, if, in the line printer apparatus, inks of different colors are emitted for recording on a recording paper sheet, by way of so-called color printing, next color liquid droplets are deposited in quick succession before the ink previously deposited on the recording paper sheer has sufficient time to be penetrated into the inside of the sheet. In such case, there is fear that boundary bleeding or all-over color mixing and speckling tends to be generated.

### Disclosure of the Invention

It is an object of the present invention to overcome the problem inherent in the above-described related art and to provide a recording liquid which is free from foaming, boundary bleeding or all-over color mixing or speckling, and which has superior emission stability to assure high quality printing, and a liquid cartridge in which is contained the recording liquid. It is also an object of the present invention to provide an apparatus and a method for liquid emission for enabling high quality printing with the use of the recording liquid contained in this liquid cartridge.

In one aspect, the present invention provides a recording liquid deposited on a support in the form of a liquid droplet to effect printing on the support; in which the recording liquid comprises a dye, a solvent for dissolving or dispersing the dye therein, and at least one of species of a compound shown by the chemical formula 1: 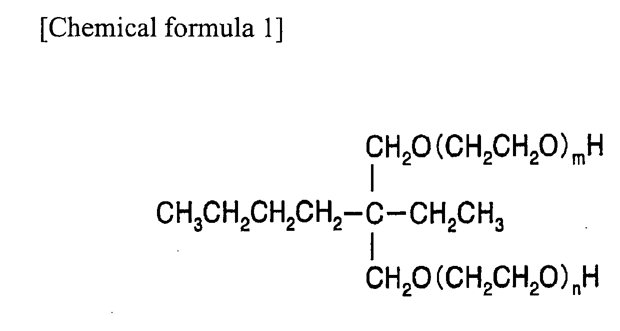 where m and n are each an integer from 0 to 10 and 1 ≤ m+n ≤ 10, and
at least one of species a compound shown by the chemical formula 2: 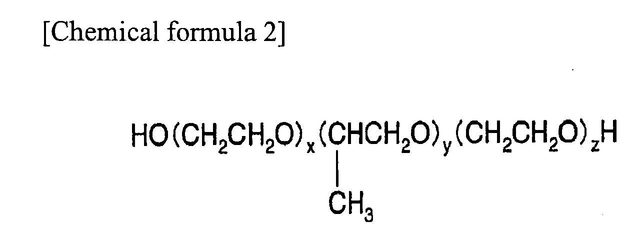 where x, y and z are each an integer such that 3 ≤ x+z ≤ 12 and 8 ≤ y ≤ 21 and the content of an ethylene oxide in the molecule is 20 to 40 wt%.

In another aspect, the present invention provides a liquid cartridge mounted on a liquid emitting head provided in a liquid emitting apparatus, in which the liquid emitting apparatus emits a recording liquid as a liquid droplet and causes the liquid droplet to be deposited on a support to effect recording thereon, the liquid cartridge operating as a supply source for the recording liquid for the liquid emitting head. The recording liquid comprises a dye, a solvent for dissolving or dispersing the dye therein, and at least one of species of the compound shown by the chemical formula 1 and at least one of species of the compound shown by the chemical formula 2.

In a further aspect, the present invention provides a liquid emitting apparatus comprising an apparatus proper, a liquid emitting head provided on the apparatus proper and including at least one liquid chamber for holding a recording liquid, a supply part for supplying the recording liquid to the liquid chamber, at least one pressurizing device provided in the liquid chamber for pressurizing the recording liquid held in the liquid chamber, and an emission port for emitting the recording liquid pressurized by the pressurizing device from the at least one liquid chamber in the form of a liquid droplet onto the major surface of the support, and a liquid cartridge connected to the liquid emitting head for operating as a supply source for supplying the recording liquid to the supply part. The recording liquid comprisea dye, a solvent for dissolving or dispersing the dye therein, and at least one of species of the compound shown by the chemical formula 1 and at least one of species of the compound shown by the chemical formula 2.

In yet another aspect, the present invention provides a liquid emitting method by a liquid emitting apparatus comprising an apparatus proper, a liquid emitting head provided on the apparatus proper and including at least one liquid chamber for holding a recording liquid, a supply part for supplying the recording liquid to the liquid chamber, at least one pressurizing device provided in the liquid chamber for pressurizing the recording liquid held in the liquid chamber, and an emission port for emitting the recording liquid pressurized by the pressurizing device from the at least one liquid chamber in the form of a liquid droplet onto the major surface of the support, and a liquid cartridge connected to the liquid emitting head for operating as a supply source for supplying the recording liquid to the supply part. The method comprises emitting the recording liquid containing a dye, a solvent for dissolving or dispersing the dye therein, and at least one of species of the compound shown by the chemical formula 1 and at least one of species of the compound shown by the chemical formula 2.

According to the present invention, since at least one species of an ethylene oxide adduct of 2-ethyl-2-butyl-1,3-propanediol, shown by the chemical formula 1, and at least one species of an ethylene oxide/ propylene oxide copolymer, shown by the chemical formula 2, are contained in the recording liquid, it becomes possible to suppress fine bubbles from being generated in the recording liquid and to improve the wettability of the recording liquid for the support for printing.

Thus, according to the present invention, since fine bubbles may be suppressed from being generated in the recording liquid, it becomes possible to prevent non-emission of the recording liquid, caused by fine bubbles, or emission defects, such as warped emitting direction, to allow recording a high-quality image free of e.g. unprinted regions. Moreover, according to the present invention, since the recording liquid may be improved in wettability, it is possible to record a high-quality image having high optical density and free from boundary bleeding or all-over color mixing or speckling even on multi-color printing of letters/ characters or images.

Other objects and advantages derived from the present invention will become more apparent from the following description which will now be made in conjunction with the accompanying drawings.

### Brief Description of the Drawings

Fig. is a perspective view showing a printer apparatus according to the present invention.
Fig.2 is a perspective view showing a head cartridge used in the printer apparatus.
Fig.3 is a cross-sectional view of the head cartridge.
Fig.4 is a chart showing the relationship between an EO content in EOPOEO and the total molecular weight of PO.
Figs.5A and 5B show an ink supply part when an ink tank is mounted on the head cartridge, where Fig.5A is a side view showing the state in which the supply port has been closed and Fig.5B shows the state in which the supply port has been opened.
Fig.6 is a front view showing the relationship between an ink emitting head and an ink tank in the head cartridge.
Figs.7A and 7B show a valving mechanism in an ink tank connecting part, where Fig.7A is a cross-sectional view showing a valve closed and Fig.7B is a cross-sectional view showing the valve opened.
Fig.8 is a cross-sectional view showing an inner structure of an ink emitting head.
Figs.9A and 9B show an ink emitting head, where Fig.9A is a cross-sectional view showing the state where an air bubble has been generated in a heating resistor and Fig.9B is a cross-sectional view showing the state where an ink liquid droplet has been emitted from the nozzle.
Fig.10 is a side view of the printer apparatus, shown with a part of the apparatus removed to show the inside structure.
Fig.11 is a schematic block diagram showing a control circuit of the printer apparatus.
Fig.12 is a flowchart for illustrating the printing operation of the printer apparatus.

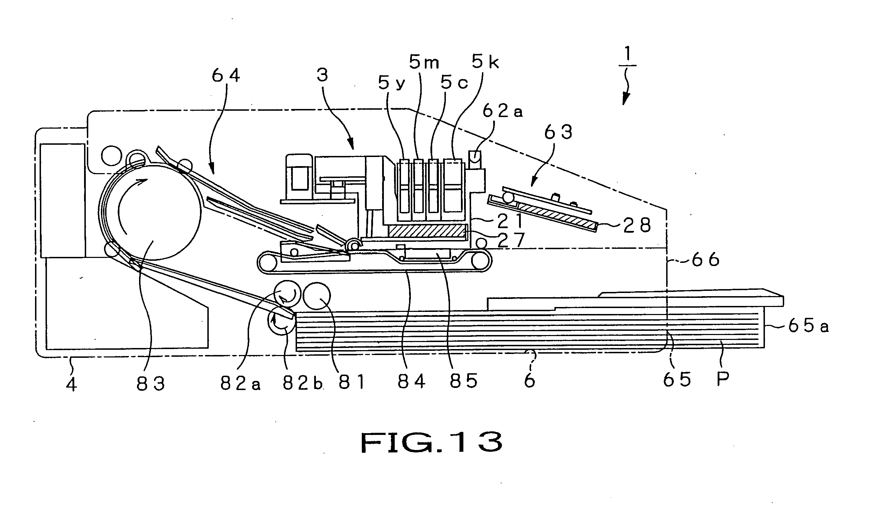

Fig.13 is a side view of the printer apparatus, shown with a part of the apparatus removed to show the inside structure, with a head cap opened.

### Best Mode for Carrying out the Invention

Preferred embodiments of an ink as a recording liquid according to the present invention, a liquid cartridge containing this ink, and an apparatus and a method for emitting the liquid, will now be described with reference to the drawings.

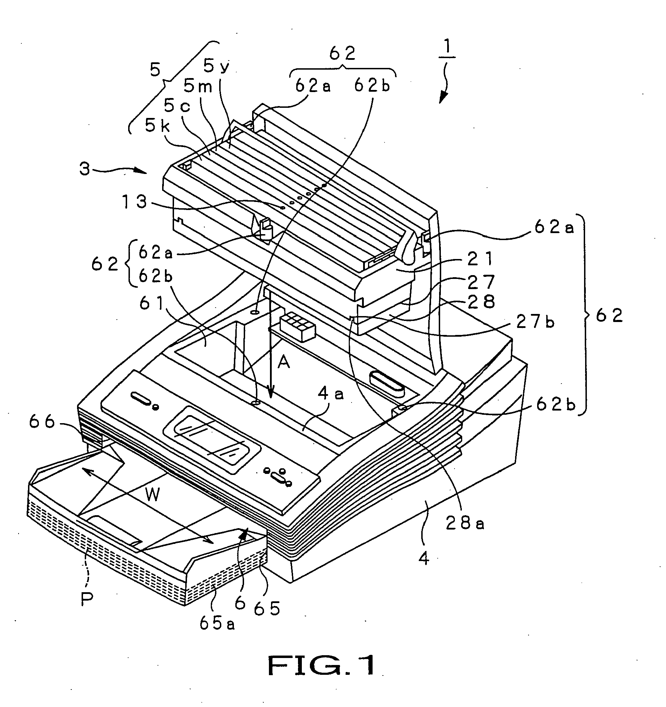

Fig.1 shows an embodiment of an ink jet printer apparatus, referred to below as a printer apparatus, employing a liquid emission device according to the present invention. The printer apparatus 1 emits e.g. an ink onto a recording paper sheet P, traveling in a preset direction, for recording an image or a letter/character thereon. The printer apparatus 1 is a so-called line printer having a substantially line-shaped row of ink emitting ports (nozzles) of a length corresponding to the printing width of the recording paper sheet P. The ink emitting ports (nozzles) are provided in a direction parallel to the width-wise direction of the recording paper sheet P as indicated by arrow W in Fig. 1.

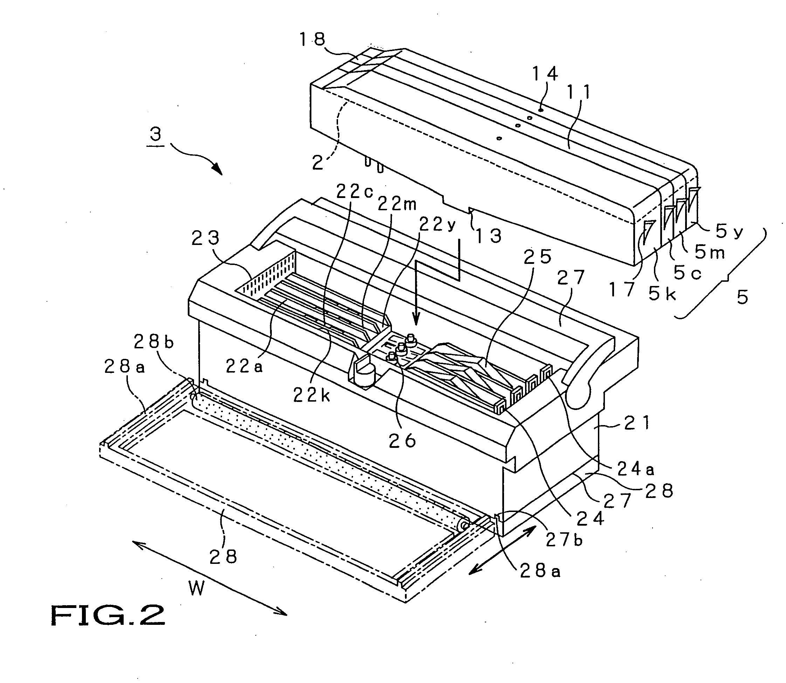

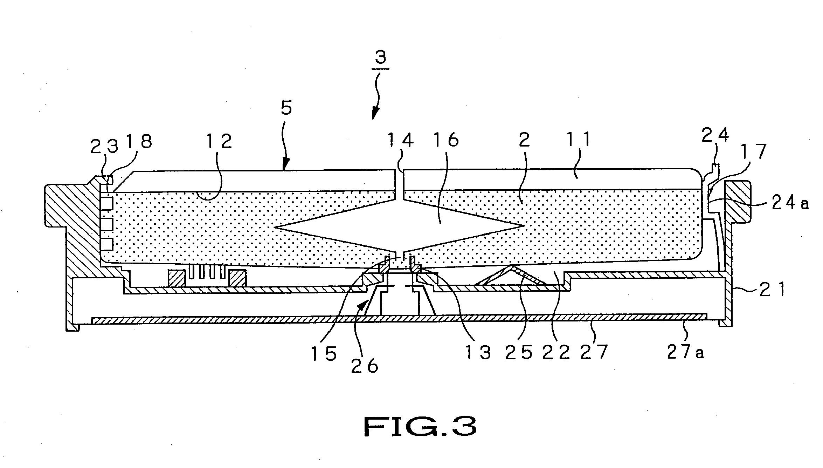

The printer apparatus 1 includes an ink jet printer head cartridge, referred to below as a head cartridge 3, and a printer proper 4 mounted on this head cartridge 3, as shown in Figs.2 and 3. The head cartridge 3 emits an ink 2 as a recording liquid adapted for recording an image or a letter/character on the recording paper sheet P. In the printer apparatus 1, the head cartridge 3 is detachably mounted on the printer proper. A plural number of ink tanks 5y, 5m, 5c and 5k, as liquid cartridges, holding inks 2 therein and operating as ink supply source for the head cartridge 3, are detachably mounted on the printer proper 4. In this printer apparatus 1, the ink tank y, holding the yellow ink, the ink tank m, holding the magenta ink, the ink tank c, holding the cyan ink and the ink tank k, holding the black ink, are used. The head cartridge 3 is detachably mounted on the printer proper 4, and the detachable ink tanks 5y, 5m, 5c and 5k, are consumable articles that may be exchanged with new ones.

In this printer apparatus 1, a tray 65a, in which a number of recording paper sheets P are held in a stacked state, is mounted on a tray mounting unit 6, provided on a front bottom side of the printer proper 4. The recording paper sheets P, held in the tray 65a, are introduced via paper sheet feed port 65 of the tray mounting unit 6 into the inside of the printer proper 4 to travel within the printer proper 4. The printer apparatus 1 prints printing data, corresponding to letter/character data or image data, received from an information processing apparatus, such as a personal computer, as letters/characters or images, to send out the printed sheets to a paper ejection port 66 on the front side of the printer proper 4.

In the ink 2, as recording liquid for printing, there are contained a dye, a solvent for dissolving or dispersing the dye, and a surfactant, which is one or more of ethylene oxide adducts of 2-ethyl-2-butyl-1,3-propanediol, shown by a chemical formula 1, referred to below, and one or more of ethylene oxide/ propylene oxide copolymers, shown by a chemical formula (2), referred to below.

For the dye, known dyes, pigments or colored fine polymer particles may be used either singly or in combination. In particular, a water-soluble dye is preferred. As the water-soluble dye, an acidic dye, a direct dye, a basic dye, a reactive dye or an edible dye may be used. Preferably, the dye may suitably be selected from the perspective of solubility in water, coloration or color fastness.

Specifically, the yellow-based water-soluble dyes may be enumerated by, for example, C.I. Acid Yellow 17, Acid Yellow 23, Acid Yellow 42, Acid Yellow 44, Acid Yellow 79, Acid Yellow 142, C.I. Food Yellow 3, C.I. Food Yellow 4, C.I. Direct Yellow 1, C.I. Direct Yellow 12, C.I. Direct Yellow 24, C.I. Direct Yellow 26, C.I. Direct Yellow 1, C.I. Direct Yellow 1, C.I. Direct Yellow 1, C.I. Direct Yellow 33, C.I. Direct Yellow 44, C.I. Direct Yellow 50, C.I. Direct Yellow 86, C.I. Direct Yellow 120, C.I. Direct Yellow 132, C.I. Direct Yellow 142, C.I. Direct Yellow 144, C.I. Direct Orange 26, C.I. Direct Orange 29, C.I. Direct Orange 62, C.I. Direct Orange 102, C.I. Basic Yellow 1, C.I. Basic Yellow 2, C.I. Basic Yellow 11, C.I. Basic Yellow 13, C.I. Basic Yellow 14, C.I. Basic Yellow 15, C.I. Basic Yellow 19, C.I. Basic Yellow 21, C.I. Basic Yellow 23, C.I. Basic Yellow 24, C.I. Basic Yellow 25, C.I. Basic Yellow 28, C.I. Basic Yellow 29, C.I. Basic Yellow 32, C.I: Basic Yellow 36, C.I. Basic Yellow 40, C.I. Basic Yellow 41, C.I. Basic Yellow 45, C.I. Basic Yellow 49, C.I. Basic Yellow 51, C.I. Basic Yellow 53, C.I. Basic Yellow 63, C.I. Basic Yellow 64, C.I. Basic Yellow 65, C.I. Basic Yellow 67, C.I. Basic Yellow 70, C.I. Basic Yellow 73, C.I. Basic Yellow 77, C.I. Basic Yellow 87, C.I. Basic Yellow 91, C.I. Reactive Yellow 1, C.I. Reactive Yellow 5, C.I. Reactive Yellow 1, C.I. Reactive Yellow 5, C.I. Reactive Yellow 11, C.I. Reactive Yellow 13, C.I. Reactive Yellow 14, C.I. Reactive Yellow 20, C.I. Reactive Yellow 21, C.I. Reactive Yellow 22, C.I. Reactive Yellow 25, C.I. Reactive Yellow 40, C.I. Reactive Yellow 47, C.I. Reactive Yellow 51, C.I. Reactive Yellow 55, C.I. Reactive Yellow 65 and C.I. Reactive Yellow 67.

The magenta-based water-soluble dyes may be enumerated by C.I. Acid Red 1, C.I. Acid Red 8, C.I. Acid Red 13, C.I. Acid Red 14, C.I. Acid Red 18, C.I. Acid Red 26, C.I. Acid Red 27, C.I. Acid Red 35, C.I. Acid Red 37, C.I. Acid Red 42, C.I. Acid Red 52, C.I. Acid Red 82, C.I. Acid Red 87, C.I. Acid Red 89, C.I. Acid Red 92, C.I. Acid Red 97, C.I. Acid Red 106, C.I. Acid Red 111, C.I. Acid Red 114, C.I. Acid Red 115, C.I. Acid Red 134, C.I. Acid Red 186, C.I. Acid Red 249, C.I. Acid Red 254, C.I. Acid Red 289, C.I. Food Red 7, C.I. Food Red 9, C.I. Food Red 14, C.I. Direct Red 1, C.I. Food Red 4, C.I. Food Red 9, C.I. Food Red 13, C.I. Food Red 17, C.I. Food Red 20, C.I. Food Red 28, C.I. Food Red 31, C.I. Food Red 39, C.I. Food Red 80, C.I. Food Red 81, C.I. Food Red 83, C.I. Food Red 89, C.I. Food Red 225, C.I. Food Red 227, C.I. Basic Red 2, C.I. Basic Red 12, C.I. Basic Red 13, C.I. Basic Red 14, C.I. Basic Red 15, C.I. Basic Red 18, C.I. Basic Red 22, C.I. Basic Red 23, C.I. Basic Red 24, C.I. Basic Red 27, C.I. Basic Red 29, C.I. Basic Red 35, C.I. Basic Red 36, C.I. Basic Red 38, C.I. Basic Red 39, C.I. Basic Red 46, C.I. Basic Red 49, C.I. Basic Red 51, C.I. Basic Red 52, C.I. Basic Red 54, C.I. Basic Red 59, C.I. Basic Red 68, C.I. Basic Red 69, C.I. Basic Red 70, C.I. Basic Red 73, C.I. Basic Red 78, C.I. Basic Red 82, C.I. Basic Red 102, C.I. Basic Red 104, C.I. Basic Red 109, C.I. Basic Red 112, C.I. Reactive Red 1, C.I. Basic Red 14, C.I. Basic Red 17, C.I. Basic Red 25, C.I. Basic Red 26, C.I. Basic Red 32, C.I. Basic Red 37, C.I. Basic Red 44, C.I. Basic Red 46, C.I. Basic Red 55, C.I. Basic Red 60, C.I. Basic Red 66, C.I. Basic Red 74, C.I. Basic Red 79, C.I. Basic Red 96 and C.I. Basic Red 97.

The cyan-based water-soluble dyes may be enumerated by C.I. Acid Blue 9, C.I. Acid Blue 29, C.I. Acid Blue 45, C.I. Acid Blue 92, C.I. Acid Blue 249, C.I. Direct Blue 1, C.I. Direct Blue 2, C.I. Direct Blue 6, C.I. Direct Blue 15, C.I. Direct Blue 22, C.I. Direct Blue 25, C.I. Direct Blue 71, C.I. Direct Blue 76, C.I. Direct Blue 79, C.I. Direct Blue 86, C.I. Direct Blue 87, C.I. Direct Blue 90, C.I. Direct Blue 98, C.I. Direct Blue 163, C.I. Direct Blue 165, C.I. Direct Blue 199, C.I. Direct Blue 202, C.I. Basic Blue 1, C.I. Basic Blue 3, C.I. Basic Blue 5, C.I. Basic Blue 7, C.I. Basic Blue 9, C.I. Basic Blue 21, C.I. Basic Blue 22, C.I. Basic Blue 26, C.I. Basic Blue 35, C.I. Basic Blue 41, C.I. Basic Blue 45, C.I. Basic Blue 47, C.I. Basic Blue 54, C.I. Basic Blue 62, C.I. Basic Blue 65, C.I. Basic Blue 66, C.I. Basic Blue 67, C.I. Basic Blue 69, C.I. Basic Blue 75, C.I: Basic Blue 77, C.I. Basic Blue 78, C.I. Basic Blue 89, C.I. Basic Blue 92, C.I. Basic Blue 93, C.I. Basic Blue 105, C.I. Basic Blue 117, C.I. Basic Blue 120, C.I. Basic Blue 122, C.I. Basic Blue 124, C.I. Basic Blue 129, C.I. Basic Blue 137, C.I. Basic Blue 141, C.I. Basic Blue 147, C.I. Basic Blue 155, C.I. Reactive Blue 1, C.I. Reactive Blue 2, C.I. Reactive Blue 7, C.I. Reactive Blue 14, C.I. Reactive Blue 15, C.I. Reactive Blue 23, C.I. Reactive Blue 32, C.I. Reactive Blue 35, C.I. Reactive Blue 38, C.I. Reactive Blue 41, C.I. Reactive Blue 63, C.I. Reactive Blue 80 and C.I. Reactive Blue 95.

The black-based water-soluble dyes may be enumerated by C.I. Acid Black 1, C.I. Acid Black 2, C.I. Acid Black 7, C.I. Acid Black 24, C.I. Acid Black 26, C.I. Acid Black 94, C.I. Food Black 1, C.I. Acid Black 2, C.I. Direct Black 19, C.I. Acid Black 22, C.I. Acid Black 32, C.I. Acid Black 38, C.I. Acid Black 51, C.I. Direct Black 56, C.I. Acid Black 71, C.I. Acid Black 74, C.I. Acid Black 75, C.I. Acid Black 77, C.I. Acid Black 154, C.I. Acid Black 168, C.I. Acid Black 171, C.I. Basic Black 2, C.I. Basic Black 8, C.I. Basic Black 3, C.I. Basic Black 4, C.I. Acid Black 7, C.I. Basic Black 11, C.I. Basic Black 12 and C.I. Basic Black 17.

The content of the dye is 1 to 10 wt% and more preferably 3 to 5 wt% based on the total weight of the ink 2. The dye content is determined as the viscosity, drying performance, emission stability or coloration of the ink 2 or physical properties on storage of printed materials are taken into account.

As the solvent, water is mainly used. Any suitable known solvents may also be used for affording desired physical properties to the ink 2, improving solubility or dispersion performance of the dye in water, or for preventing desiccation of the ink 2.

Specified examples of organic solvents include lower alcohols, such as ethanol or 2-propanol, polyhydric alcohols, such as ethylene glycol, diethylene glycol, triethylene glycol, polyethylene glycol, 1,5- pentadiol, 1,6- hexane diol, glycerol, 1,2,6- hexane triol, 1,2,4- butane triol and petriol, polyhydric alcohol alkylethers, such as ethylene glycol monoethylether, ethylene glycol monobutylether, diethylene glycol monomethylether, diethylene glycol monoethylether, diethylene glycol monobuylether, tetraethylene glycol monomethylether or propylene glycol monoethylether, polyhydric alcohol alkylethers, such as ethylene glycol monophenylether or ethylene glycol monobenzylether, and nitrogen-containing heterocyclic compounds, such as N-methyl-2-pyrrolidone, N-hydroxyethyl-pyrrolidone, 1,3-dimethyl imidazoylidinone, ε-caprolactum or γ-butyrolactone. Other examples include amides, such as formamide, N-methyl formamide and N,N- dimethyl formamide, amines, such as monoethanolamine, diethanolamine, triethanolamine, monoethylamine, diethylamine or triethylamine, and sulfur-containing compounds, such as dimethylsulfoxide, sulfolane or thiodiethanol.

The content of the organic solvent is 5 to 50 wt% and more preferably 10 to 35 wt% based on the total weight of the ink 2. The content of the organic solvent is determined as the viscosity, drying performance or emission stability of the ink 2 is taken into account.

There is contained in the ink 2, in addition to the aforementioned dyes and organic solvents, a surfactant composed of at least one of ethylene oxide adducts of 2-ethyl-2-butyl-1,3-propanedio, referred to below as EBPD-EO, represented by the following chemical formula (3), and at least one of ethylene oxide/ propylene oxide copolymers, referred to below as EOPOEO, represented by the following chemical formula (4): 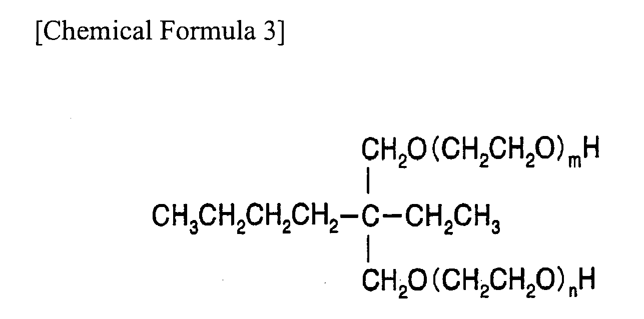 where m and n are each an integer from 0 to 10, with 1 ≤ m+n ≤ 10 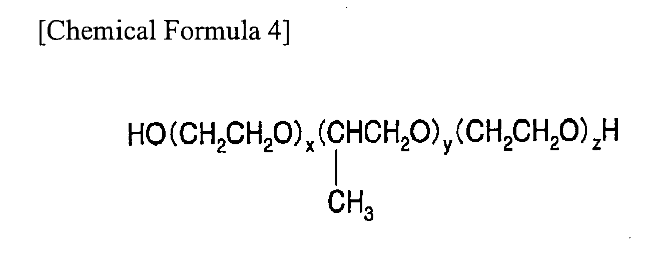 where x, y and z are integers, with 3 ≤ x+z ≤ 12 and 8 ≤ y ≤ 21, and the content of an ethylene oxide in the molecule is 20 to 40 wt%.

Both of EBPD-EO and EOPOEO are able to suppress fine bubbles from being produced in the ink 1 to improve the wettability of the ink 2. In particular, EBPD-EO is able to improve the wettability of the ink 2, and EOPOEO is able to suppress fine bubbles from being generated in the ink 2.

Specifically, the sum of mols added (m+n) of ethylene oxide, referred to below as EO, in EBPD-EO, represented by the chemical formula (3), is not less than 1 and not more than 10 and more preferably not less than 2 and not more than 4. EBPD-EO is superior in wettability with respect to a surface of a variety of metal or plastics parts, and hence it is possible to prohibit fine bubbles in the ink 2 from becoming deposited on the inner surface of the ink cartridge 3 which will be explained subsequently. Moreover, since the EBPD-EO is superior in wettability with respect to the recording paper sheet P, an image obtained on depositing the ink 2 on the recording paper sheet P to record an image or a letter/character thereon, that is, on printing, is sufficiently high in optical density to suppress boundary bleeding or all-over color mixing and speckling from being generated to form an image printed to high quality.

In case the total of mols of EO added (m+n) is lesser than 1, EBPD-EO becomes inferior in solubility in water, and hence tends to undergo phase separation in the ink 2 to detract from the physical properties of the ink 2. If conversely the total of mols of EO added (m+n) is greater than 10, EBPD-EO is excessively hydrophilic, so that the function of the surfactant is lowered. In this case, fine bubbles cannot be prevented from being formed in the ink 2 and, in addition, the ink 2 is increased in viscosity.

By setting the total of mols of EO (m+n) in EBPD-EOPOEO in the ink 2 to not less than 1 and not more than 10, it becomes possible to suppress fine bubbles from being generated in the ink 2 to improve the wettability of the ink 2 to form a high-quality image having high optical density and suffering boundary bleeding or all-over color mixing and speckling only to a limited extent.

The total number (x+z) of ethylene oxide units (EO units) in the ethylene oxide/ propylene oxide copolymer, referred to below as EOPOEO, represented by the chemical formula (2), is not less than 3 and not more than 12 and more preferably not less than 3 and not more than 10. The content of the total units of EO units in the EOPOEO molecule is not less than 20 wt% and not more than 40 wt%. In EOPOEO, the number of units (y) of propylene oxide (PO) is not less than 8 and nor more than 21 and more preferably not less than 8 and nor more than 16. That is, since the molecular weight of one PO unit is 58, to total molecular weight of the PO units in EOPOEO is not less than 464 and not more than 1218.

With EOPOEO, it is possible to suppress fine bubbles from being generated in the ink 2. Thus, with the ink 2, emission defects, such as a fine bubble stopping up the nozzle 52a to obstruct emission of the ink 2 or the emitting direction of the ink 2 being deviated from an intended emitting direction, may be eliminated to produce superior emission stability.

In case the total number (x+z) of EO units is less than 3 or the content of the EO units is less than 20 wt%, EOPOEO is inferior in solubility in water. In such case, EOPOEO becomes turbid in a warming-up state of the apparatus and hence the physical properties of the ink 2 are lowered.

In case the total number (x+z) of EO units is more than 10 or the content of the total EO units is more than 40 wt%, EOPOEO becomes excessive in hydrophilicity and hence the function of the surfactant is lowered. In such case, it becomes difficult to suppress fine bubbles from being generated in the ink 2.

On the other hand, if the number of units (y) of PO is less than 8, that is, if the total molecular weight of the PO unit is less than 464, EOPOEO is excessive in hydrophilicity and may readily be soluble in water. However, surface active properties are lowered, so that fine bubbles may no longer be suppressed from being generated.

If the number of PO units (y) exceeds 21, that is, if the total molecular weight of the PO unit is larger than 218, EOPOEO becomes hydrophobic and is hardly soluble even at ambient temperature. In such case, the ink 2 becomes turbid in a warming-up state, and is lowered in physical properties.

Hence, in EOPOEO, the total number (x+z) of EO units is to be not less than 3 and not more than 12, the content of the total EO units in EOPOEO is to be not less than 20 wt% and mot more than 40 wt%, and the number of PO units (y) is to be not less than 8 and not more than 21, that is, the total molecular weight of PO units is to be not less than 464 and not more than 1218. It is possible in such case to prevent the nozzle 52a from being stopped up by the fine bubbles to improve emission stability of the ink 2.

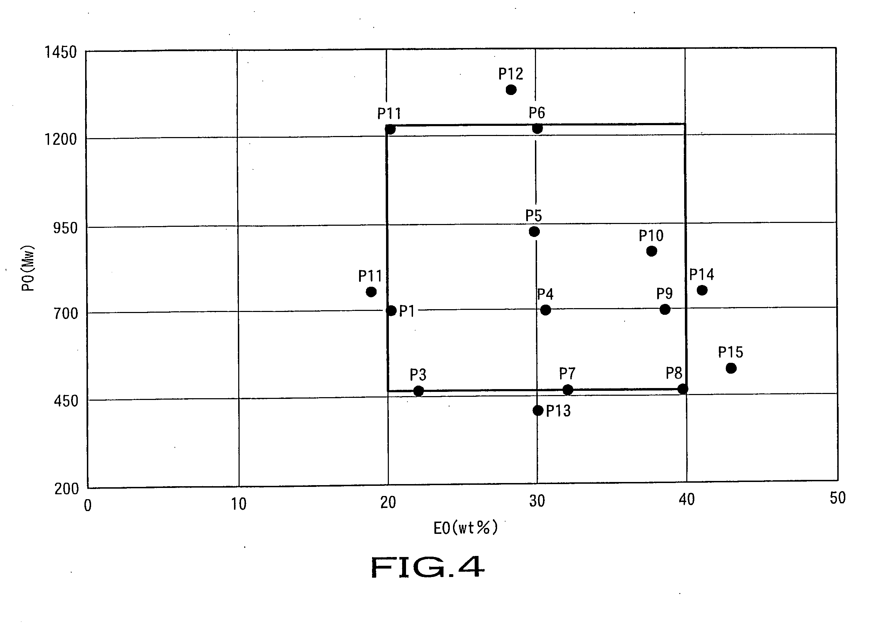

Fig.4 shows the relationship between the content of EO in EOPOEO (EO wt%) and the total molecular weight of PO (PO wt%). In Fig.4, a region surrounded by a thick-lined frame is a region where the EO content is not less than 20 wt% and not more than 40 wt% and the total molecular weight of the PO unit is not less than 464 and not more than 1218. If EOPOEO satisfying the relationship of the EO content and the molecular weight of the PO units delimited by this thick-lined frame is contained in the ink 2, it is possible to suppress the nozzle 52a from being stopped up by fine bubbles to assure optimum emission stability and to prevent the physical properties of the ink 2 from being impaired. Moreover, if EOPOEO satisfying the relationship of the EO content and the molecular weight of the PO units delimited by this thick-lined frame is contained in the ink 2 used, fine bubbles are prevented from being generated in the ink 2, as described above. In this case, the nozzle 52a may not be stopped up with fine bubbles to assure optimum emission stability to prevent the ink 2 from being lowered in physical properties. In case EOPOEO satisfying the relationship between the EO content and the molecular weight of the PO units as defined by the thick-lined frame is used, the ink 2 is improved in wettability, so that fine bubbles, if generated, are discharged without staying in the ink emitting head. Moreover, since the ink 2 exhibits superior wettability, the printed image may be improved in quality.

More specifically, referring to Fig.4, plots 1 to 10 (P 1 to P 10 in Fig.4) are for the content of EO in EOPOEO not less than 20 wt% and not more than 40 wt%, with the total molecular weight of the PO unit being not less than 464 and not more than 1218.

**Table 1**

| | EO(x+z) | PO(y) | EO(wt%) | PO(wt%) |
|---|---|---|---|---|
| P1 | 4 | 12 | 20.2 | 696 |
| P2 | 7 | 21 | 20.2 | 1218 |
| P3 | 3 | 8 | 22.1 | 464 |
| P4 | 7 | 12 | 30.7 | 696 |
| P5 | 9 | 16 | 29.9 | 928 |
| P6 | 12 | 21 | 30.2 | 1218 |
| P7 | *5* | 8 | 32.2 | 464 |
| P8 | 7 | 8 | 39.9 | 464 |
| P9 | 10 | 12 | 38.7 | 696 |
| P10 | 12 | 15 | 37.8 | 870 |
| P11 | 4 | 13 | 18.9 | 754 |
| P12 | 12 | 23 | 28.4 | 1334 |
| P13 | 4 | 7 | 30.2 | 406 |
| P14 | 12 | 13 | 41.2 | 754 |
| P15 | 9 | 9 | 43.1 | 522 |

If EOPOEO represented by the plots 1 to 10 is used, emission stability and wettability of the ink 2 are optimum.

On the other hand if EOPOEO indicated by a plot 11 is used, the total molecular weight of the PO units in EOPOEO is 18.9 wt%, with the content of ethylene oxide being small. Hence, EOPOEO is lowered in solubility of in water, and phase separation tends to be generated, with the result that the ink 2 becomes turbid to detract from the physical properties of the ink 2 emitted.

If EOPOEO indicated by a plot 12 is used, the total molecular weight of the PO units in EOPOEO is 1334 which is larger than the total molecular weight of the PO units. Hence, EOPOEO becomes hydrophobic and hardly soluble at ambient temperature, with the result that the ink 2 becomes turbid to detract from the physical properties of the ink 2.

If EOPOEO indicated by a plot 13 is used, the total molecular weight of the PO units in EOPOEO is 406, and the total molecular weight of the PO units is smaller than 464. Hence, EOPOEO becomes highly hydrophilic and readily soluble in water, with the result that surface active properties are lowered and fine bubbles are generated.

If EOPOEO of plots 14 and 15 is used, the content of EO in EOPOEO is as high as 41.2 wt% and 43.1 wt%, respectively. Hence, EOPOEO becomes excessively turbid and the function of the surfactant is lowered. Fine bubbles are generated in the ink 2, while the ink 2 becomes higher in viscosity.

In light of the above, in EOPOEO, the total number (x+z) of EO units is not less than 3 and not more than 12, the content of the total EO units in EOPOEO is not less than 20 wt% and not more than 40 wt%, and the number (y) of PO units is not less than 8 and not more than 21, that is, the total molecular weight of the PO units is not less than 464 and not more than 1218. In this case, fine bubbles may be suppressed from being generated without lowering the physical properties of the ink 2.

The ratio of the total number (x+z) of EO units to the total number (y) of PO units in EOPOEO, described above, or (x+z)/y, is e.g. 3~6/7, 3~7/8, 3~7/9, 4~8/10, 4~9/11, 4~10/12, 5~11/13, 5~12/14, 5~12/15, 6~12/16, 6~12/17, 6~12/18, 7~12/19, 7~12/20 or 7~12/21. These EOPOEO species are roughly of the molecular weight not larger than 1700 and more preferably not larger than 1300. The high molecular weight exceeding 1700 is not desirable because the ink viscosity is then increased.

The amounts of addition of EBPD-EO and EOPOEO are each 0.05 to 5 wt% and more preferably 0.1 to 2 wt% based on the total weight of the ink 2. In case the amount of addition of the compounds is less than 0.05 wt%, it is not possible to suppress fine bubbles from being generated or to prevent the ink 2 from becoming turbid. In such case, the favorable effect of addition of the chemical formulas (1) and (2) may not be achieved. If conversely the amounts of addition of the compounds are larger than 5 wt%, the ink 2 becomes thickened.

The amounts of the two compounds EBPD-EO and EOPOEO, summed together, are preferably 0.1 to 5 wt%, more preferably 0.2 to 3 wt%, based on the total weight of the ink 2. The ratio of addition of the two compounds is 10:90 ~ 90:10 and more preferably 30:70 ~ 70:30.

It is seen from above that, since at least one compound of EBPD-EO shown by the chemical formula (1) and at least one compound of EOPOEO shown by the chemical formula (2) are contained in the ink 2, non-emission or emission defects of the ink 2 may be prohibited, and the ink 2 may be emitted in stability in a predetermined direction, with the result that a high quality image free of unprinted spots may be produced. Moreover, since the ink 2 contains at least one species of the compound of the chemical formula (1) and at least one species of the compound of the chemical formula (2), it is improved in wettability with respect to a variety of metal and plastics parts or recording paper sheets P. Even with multi-color printing, a high quality image may be produced which is high in optical density and which is free from boundary bleeding or from all-over color mixing or speckling. That is, with the ink 2, recording may be made with high emission stability and high optical density in a manner free from boundary bleeding or from all-over color mixing or speckling.

Moreover, with the above ink 2, the dynamic surface tension (γ₂) at 20 Hz, in a 25°C atmosphere, that is, the dynamic surface tension in case an air bubble is generated every 50 msec, is not less than 30 mN/m, while the dynamic surface tension (γ₁) at 1 Hz, that is, the dynamic surface tension in case an air bubble is generated every 1 sec, is not more than 38 mN/m. With the ink 2, having such dynamic surface tension, the optical density becomes higher to further suppress the boundary bleeding and all-over color mixing and specking. If, with the ink 2, the dynamic surface tension (γ₂₀) at 20 Hz is less than 30 mN/m, wettability of the ink is excessive, such that, when the ink 2 is deposited on the recording paper sheet P, the ink tends to be penetrated along the thickness of the recording paper sheet P to lowe the optical density. If, with the ink 2, the dynamic surface tension (γ₁) at 1 Hz is larger than 38 mN/m, bleeding tends to be generated in the in-plane direction of the recording paper sheet P, with the result that boundary bleeding and all-over color mixing and specking tend to be worsened. That is, the ink 2 in which, in a 25°C atmosphere, the dynamic surface tension (γ₂₀) at 20 Hz is not less than 30 mN/m, and the dynamic surface tension (γ₁) at 1 Hz is not more than 38 mN/m, may be penetrated moderately along the direction of thickness and in the in-plane direction of the recording paper sheet P, with the result that recording may be made with high optical density and in a manner free from boundary bleeding and all-over color mixing and specking.

The dynamic surface tension of the ink 2 may be adjusted, as appropriate, depending mainly on the sorts and amounts of addition of various species of the EBPD-EO and EOPOEO.

In addition to the compounds (1) and (2), other known surfactants may also be used insofar as these other surfactants are not deterrent to the favorable effects proper to the compounds (1) and (2). Example of the known surfactants include special phenolic non-ionic surfactants, such as polycyclic phenol ethoxylates, esteric non-ionic surfactants, such as ethylene oxide adducts of glyceride, polyethylene glycol oleates, polyoxyalkyklene taloates, sorbitan oleyl esters or polyoxyethylene sorbitan oleyl esters, amidic non-ionic surfactants, such as coconut oil fatty acid diethanol amides or polyoxyethylene coconut oil fatty acid monoethanol amides, acetylene glycol or an ethylene oxide adducts thereof, anionic surfactants, such as alcohol sulfate sodium salts, higher alcohol sulfate sodium salts, polyoxyethylene alkylphenylether sulfate ammonium salts or sodium alkylbenzene sulfonates, cationic surfactants, such as mono-long-chain alkyl cations, di-long-chain alkyl cations or alkylamine oxides, and amphoteric surfactants, such as laurylamidepropyl acetic acid betain or laurylamino acetic acid betain. These known surfactants may be used either alone or in combination.

The aforementioned known surfactants are added in an amount not more than 30 wt% and more preferably not more than 20 wt%, based on the total weight of EBPD-EO and EOPOEO contained in the ink 2. The reason is that, if the amount of the known surfactants added exceeds 30 wt%, the optical density is lowered, while boundary bleeding and all-over color mixing and specking are generated.

The dynamic surface tension may be measured using a dynamic surface tension meter prepared in accordance with a known principle of measuring the dynamic surface tension as disclosed for example in the JP Laid-Open Patent Publication S63-31237. Specifically, a bubble pressure dynamic surface tension meter, manufactured by KRUSS under the trade name of BP-2, capable of measuring dynamic surface tension in accordance with a maximum bubble pressure method, or a dynamic surface tension measurement device, manufactured by LAUDA under the trade name of MPT2, may be used.

With the ink 2, containing EBPD-EO, the dynamic surface tension (γ₂₀) at 20 Hz is set to not less than 30 mN/m and the dynamic surface tension (γ₁) at 1 Hz is set to not more than 38 mN/m. The speed of ink penetration into the recording paper sheet P, stated differently, the spreading from the site of deposition of the ink 2 in the in-plane direction and in the direction of thickness of the recording paper sheet P along the pulp fibers in the recording paper sheet P, becomes uniform.

In the ink 2, there may be further contained a viscosity adjustment agent, a pH adjustment agent, antiseptics, rust-proofing agents or mold-proofing agents, in addition to the dyes, solvents, EBPD-EO and EOPOEO, as surfactants, and the aforementioned known surfactants.

The viscosity adjustment agents and the pH adjustment agents may be exemplified by, for example, protein, such as gelatin or casein, natural rubber, such as gum Arabic, cellulose derivatives, such as methyl cellulose, carboxy methyl cellulose or hydroxyl methyl cellulose, lignin sulfonates, natural high polymers, such as shellac, polyacrylates, styrene acrylic acid copolymers, polyvinyl alcohol andr polyvinyl pyrrolidone. These may be used either alone or in combination. The antiseptics, rust-proofing agents or mold-proofing agents may be enumerated by benzoic acid, dichlorophene, hexachlorophene, sorbic acid, p-hydroxy benzoate and ethylene diamine tetraacetic acid (EDTA). These may be used either alone or in combination.

In preparing the above ink 2, at least one species each of the above dye, solvent, EBPD-EO and EOPOEO are mixed at a preset mixing ratio and agitated or dispersed with, for example a screw, as the mixture is at ambient temperature or heated to 40 °C to 80 °C.

As for the ink 2, described above, a yellow ink is contained in the ink tank 5y, a magenta ink is contained in the ink tank 5m, a cyan ink is contained in the ink tank 5c and a black ink is contained in the ink tank 5k.

The head cartridge 3, that may be dismounted from the printer proper 4 of the printer apparatus 1, and the ink tanks 5y, 5m, 5c and 5k, that may be dismounted from the head cartridge 3, will now be described with reference to the drawings.

The head cartridge 3, used for printing on the recording paper sheet P, is mounted from the side of the upper surface of the printer proper 4, that is, from the direction indicated by arrow A in Fig.1, and emits the ink 2 onto the recording paper sheet P to effect printing.

The head cartridge 3 comminutes the above ink 2 into fine particles, under a pressure generated by a pressure generating means of, for example, the electro-thermal or electro-mechanical converter, to emit the fine ink particles. The head cartridge 3 sprays the ink 2 in the form of fine liquid droplets onto the major surface of the recording paper sheet P as a printing support. Specifically, the head cartridge 3 includes a cartridge proper 21, as shown in Figs.2 and 3. The ink tanks 5y, 5m, 5c and 5k, as vessels holding the ink 2, are loaded on this cartridge proper 21. The ink tanks 5y, 5m, 5c and 5k may sometimes be referred to below collectively as an ink tank.

The ink tank 5, which may be mounted on and dismounted from the head cartridge 3, includes a tank proper 11 fabricated on injection molding e.g. a resin material exhibiting high toughness and ink-resistant properties, such as polypropylene. This tank proper 11 is formed to a substantially rectangular shape having a size substantially equal to a width-wise size of the recording paper sheet P in use to maximize the ink storage capacity.

Specifically, the tank proper 11 of the ink tank 5 includes an ink container 12, holding the ink 2, an ink supply part 13 for supplying the ink 2 from the ink container 12 into the cartridge proper 21, and a port for communicating with outside 14 for taking in air from outside into the ink container 12. The tank proper 11 also includes an air inlet duct 15 for introducing air taken in via port for communicating with outside 14 into the ink container 12, and a storage part 16 for transient storage of the ink 2 between the port for communicating with outside 14 and the air inlet duct 15. The tank proper 11 also includes a retention boss 17 and a engagement step 18 for retaining the ink tank on the cartridge proper 21.

The ink container 12 is formed of a material of high air-tightness and delimits a space within which to hold the ink 2. The ink container 12 is formed to a substantially rectangular shape and has a longitudinal size substantially equal to the width-wise size of the recording paper sheet P, that is, the size along e arrow W in Fig.2.

The ink supply part 13 is provided at a mid lower part of the ink container 12. The ink supply part 13 is a nozzle with a pointed end communicating with the ink container 12 and having the end fitted into a connecting part 26 of the head cartridge 3 as later described for connecting the tank proper 11 of the ink tank 5 with the cartridge proper 21 of the head cartridge 3.

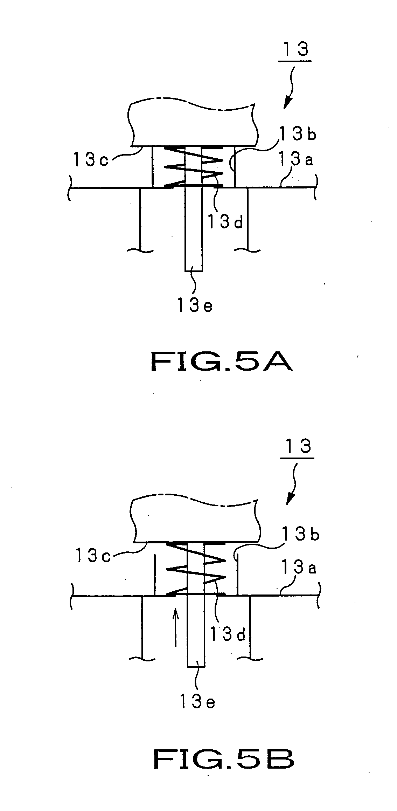

Referring to Figs.5A and 5B, the ink supply part 13 includes a supply port 13b for supplying the ink 2 to a bottom 13a of the ink tank 5. The bottom 13a includes a valve 13c for opening/closing the supply port 13b, a coil spring 13d for biasing the valve 13c in a direction of closing the supply port 13b, and an opening/closure pin 13e for opening/ closing the valve 13c. The supply port 13b, connected to the connecting part 26 of the head cartridge 3, and via which to supply the ink 2, is biased under the force of the coil spring 13d, as a biasing member, in a direction in which the valve 13c closes the supply port 13b, and closes the supply port, before the ink tank 5 is mounted on the cartridge proper 21 of the head cartridge 3, as shown in Fig.5A. When the ink tank 5 is mounted on the cartridge proper 21, the opening/ closure pin 13e is uplifted, by an upper part of the connecting part 26 of the cartridge proper 21 of the head cartridge 3, in a direction opposite to the biasing direction of the coil spring 13d, as shown in Fig.5B. The opening/ closure pin 13e, thus uplifted, uplifts the valve 13c, against the bias of the coil spring 13d, to open the supply port 13b. In this manner, the ink supply part 13 of the ink tank 5 is connected to the connecting part 26 of the head cartridge 3 for establishing communication between the ink container 12 and the ink reservoir 31 to enable the ink 2 to be supplied to the ink reservoir 31.

Also, when the ink tank 5 is pulled out from the connecting part 26 of the head cartridge 3, that is, when the ink tank 5 is dismounted from the mounting section 22 of the head cartridge 3, the opening/ closure pin 13e ceases to uplift the valve 13c, with the valve 13c being moved in the biasing direction of the coil spring 13d to close the supply port 13b. Thus, even if the foremost part of the ink supply part 13 is directed downwards, immediately before mounting the ink tank 5 on the cartridge proper 21, it is possible to prevent the ink 2 from leaking from the inside of the ink container 12. Moreover, in case the ink tank 5 is extracted from the cartridge proper 21, the valve 13c immediately closes the supply port 13b to prevent the ink 2 from leaking from the foremost part of the ink supply part 13.

The port for communicating with outside 14 is an air communication port for taking in air from outside the ink tank 5 into the ink container 12, as shown in Fig.3. The port for communicating with outside 14 is mounted at a preset location, herein at a mid part, on the upper surface of the tank proper 11, which location faces outwards when the ink tank 5 is mounted on the mounting section 22, so that, even in case the ink tank is mounted on the mounting section 22 of the head cartridge 3, the ink tank may be exposed to outside to take in outside air. When the ink tank 5 is mounted on the cartridge proper 21 and the ink 2 flows down from the ink container 12 towards the cartridge proper 21, an amount of air corresponding to the decreased amount of the ink 2 in the ink container 12 is taken in via the port for communicating with outside 14 into the ink tank 5.

The inlet duct 15 sets up communication between the ink container 12 and the port for communicating with outside 14 to introduce air taken in via port for communicating with outside 14 into the ink container 12. Thus, when the ink 2 is supplied to the cartridge proper 21 of the head cartridge 3 and the quantity of the ink 2 in the ink container 12 is decreased to reduce the inside pressure, air may be supplied by the inlet duct 15 into the ink reservoir 1. Hence, the inside pressure may be maintained in equilibrium state to continue to supply the ink 2 properly to the cartridge proper 21.

The storage part 16 is provided between the port for communicating with outside 14 and the inlet duct 15 for transiently holding the ink 2 so that, when the ink 2 has leaked from the inlet duct 15 communicating with the ink container 12, the ink 2 will not flow out precipitously to outside. The inlet duct 15 of the storage part 16 is provided at the lowermost location of the ink container 12 so that the ink 2 from the ink container 12 will again be restored to the ink container 12. Additionally, the port for communicating with outside 14 is provided at the lower apex point of the shorter diagonal line of the storage part 16 to render it difficult for the ink 2 intruded from the ink container 12 to exit to outside from the port for communicating with outside 14.

The retention boss 17 is provided on one lateral side of the short side of the ink tank 5 and is engaged in an engagement opening 24a formed in a latch lever 24 of the cartridge proper 21 of the head cartridge 3.

The engagement step 18 is provided on the upper part of a lateral side of the ink tank opposite to the lateral side thereof carrying the retention boss 17. When inserted into the mounting section 22 of the head cartridge 3, the engagement step 18 is engaged with a mating engagement member 23 provided on the mounting section 22 of the head cartridge 3 to act as a pivot for rotation in mounting the ink tank 5 on the mounting section 22.

The above-described ink tank 5 includes, in addition to the above components, a detector for detecting the residual quantity of the ink 2 in the ink container 12 and a discriminator for discriminating the ink tanks 5y, 5m, 5c and 5k.

The head cartridge 3, on which are mounted the ink tanks 5y, 5m, 5c and 5k, described above, containing the inks 2 of yellow, magenta, cyan and yellow, will now be described.

Referring to Figs.2 and 3, the head cartridge 3 is made up of the ink tank 5 and the cartridge proper 21. The cartridge proper 21 includes mounting sections 22y, 22m, 22c and 22k, the ink tanks 5 are mounted to. The mounting sections are referred to below as a mounting section 22 when the mounting sections are referred to collectively. The cartridge proper 21 also includes the mating engagement members 23 and a latch lever 24 for securing the ink tank 5, a biasing member 25 for biasing the ink tank 5 in a take-out direction, a connecting part 26 connected to the ink supply part 13 so as to be supplied with the ink 2, an ink emitting head 27 for emitting the ink 2, and a head cap 28 for protecting the ink emitting head 27.

The mounting sections 22, the ink tanks 5 are mounted to, have upper surfaces recessed to permit the ink tanks 5 introduced and mounted in position or dismounted. Four ink tanks 5 are mounted in these sections for extending in a direction substantially at right angles to the width-wise direction of, that is, parallel to the running direction of, the recording paper sheet P. Similarly to the ink tanks 5, the mounting sections 22 are mounted with the lengths thereof parallel to the printing width, because the ink tanks 5 are mounted in these sections. The ink tanks 5 are housed and mounted in the cartridge proper 21.

The ink tanks 5 are mounted in the mounting sections 22, as shown in Fig.2. The ink tank 5y for yellow ink, the ink tank 5m for magenta ink, the ink tank 5c for cyan ink and the ink tank 5k for black ink are mounted in the mounting sections 22y, 22m, 22c and 22k, respectively. The mounting sections 22y, 22m, 22c and 22k are separated from one another by partitions 22a.

The opening end of the mounting section 22, adapted for receiving the ink tank 5, is provided with the mating engagement member 23, as shown in Fig.3. The mating engagement member 23 is provided on one longitudinal end face of the mounting section 22 for engaging with the engagement step 18 of the ink tank 5. The ink tank 5 may be mounted on the mounting section 22 as the ink tank is obliquely inserted into the inside of the mounting section 22, with the side of the engagement step 18 of the ink tank 5 as an inserting side, and as the ink tank side not having the engagement step 18 is turned towards the mounting section 22, with the site of engagement of the engagement step 18 with the mating engagement member 23 as pivot point. This assures facilitated mounting of the ink tank 5 on the mounting section 22.

The latch lever 24 is formed by warping a spring plate and is provided on the lateral side of the mounting section 22 opposite to the mating engagement member 23, that is, on the opposite longitudinal end face of the mounting section 22. The latch lever 24 has its proximal end formed as one with the bottom surface of the longitudinally opposite end face of the mounting section 22, while having its distal end elastically deformed in a direction towards and away from the bottom surface. The latch lever is formed with an engagement recess 24a in its distal part. The latch lever is flexibly deformed at the same time as the ink tank 5 is mounted on the mounting section 22, with the retention boss 17 of the ink tank 5 then engaging in the engagement recess 24a to prohibit the ink tank 5 from becoming detached from the mounting section 22.

The biasing member 25 is formed by a warped spring plate mounted on the bottom on the lateral side of the ink tank associated with the retention step 18 for biasing the ink tank 5 in an ink tank dismounting direction. The biasing member 25 is an ejector for thrusting the bottom surface of the ink tank 5 for biasing the ink tank 5 mounted on the mounting section 22 in a direction of dismounting the ink tank 5 from the mounting section 22. The biasing member 25 dismounts the ink tank 5 from the mounting section 22 when the retention boss 17 is disengaged from the engagement recess 24a of the latch levers 24.

At a longitudinally mid part of each of the mounting sections 22y, 22m, 22c and 22k, there is provided the connecting part 26, the ink supply part 13 of each of the ink tanks 5y, 5m, 5c and 5k is connected to when the ink tanks 5y, 5m, 5c and 5k are mounted on the mounting sections 22y, 22m, 22c and 22k, respectively. The connecting part 26 operates as ink supply duct for supplying the ink 2 from the ink supply part 13 of the ink tank 5 loaded on the mounting section 22 to the ink emitting head 27 provided on the bottom surface of the cartridge proper 21.

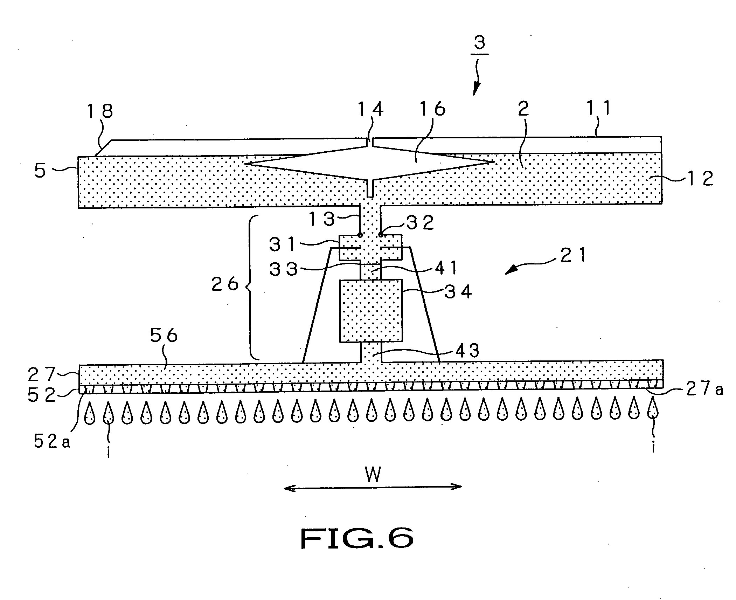

Specifically, the connecting part 26 includes an ink reservoir 31, for storing the ink 2 supplied from the ink tank 5, a sealing member 32 for sealing the ink supply part 13 connected to the connecting part 26, a filter 33 for removing impurities in the ink 2 and a valving mechanism 34 for opening/ closing a supply duct to the ink emitting head 27, as shown in Fig.6.

The ink reservoir 31 is a space communicating with the ink supply part 13 and within which to hold the ink 2 supplied from the ink tank 5. The sealing member 32 is provided at an upper end of the ink reservoir 31 for hermetically sealing the space between the ink reservoir 31 and the ink supply part 13 to prevent leakage of the ink 2 to outside in case the ink supply part 13 of the ink tank 5 is connected to the ink reservoir 31 of the connecting part 26. The filter 33 is used for removing dust and dirt mixed into the ink 2, in mounting or dismounting the ink tank 5, and is provided on the downstream side of the ink reservoir 31.

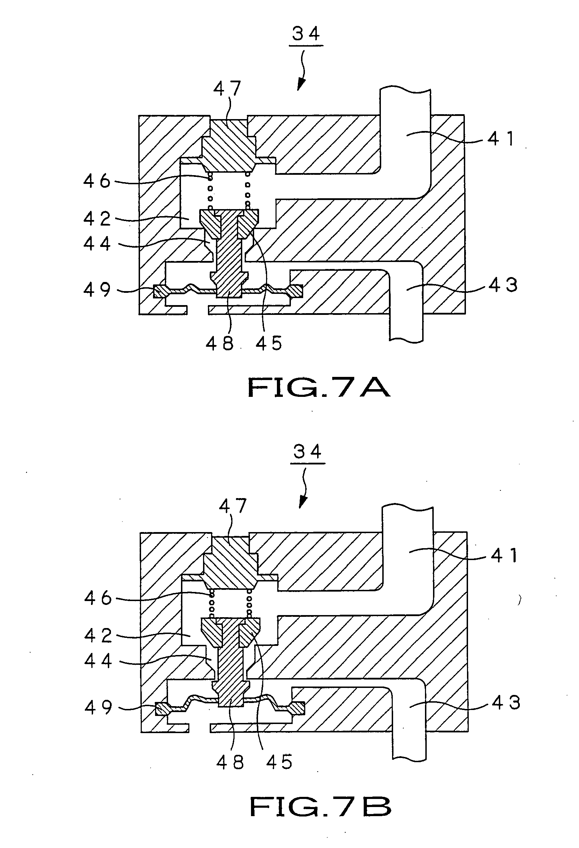

Referring to Figs.7 and 7B, the valving mechanism 34 includes an ink inlet duct 41, in which the ink 2 is supplied from the ink reservoir 31, an ink chamber 42, through which flows the ink 2 supplied from the ink inlet duct 41, and an ink outlet duct 43, through which flows the ink 2 from the ink chamber 42. The valving mechanism also includes an opening 44, provided between the ink inlet duct 41 and the ink outlet duct 43, in the ink chamber 42, a valve 45 for opening/ closing the opening 44, and a biasing member 46 for biasing the valve 45 in the direction of closing the opening 44. The valving mechanism also includes a negative pressure adjustment screw 47, for adjusting the biasing force of the biasing member 46, a valve shaft 48 connected to the valve 45 and a diaphragm 49 connected to the valve shaft 48.

The ink inlet duct 41 is an ink duct via which the ink 2 in the ink container 12 of the ink tank 5 may be supplied via ink reservoir 31 to the ink emitting head 27. The ink inlet duct 41 is provided for extending from the bottom of the ink reservoir 31 to the ink chamber 42.

The ink chamber 42 is formed substantially as a parallelepiped by an ensemble of the ink inlet duct 41, ink outlet duct 43 and the opening 44. The ink 2 flows into the ink inlet duct 41 to flow outwards from the ink outlet duct 43 via opening 44.

The ink outlet duct 43, into which the ink 2 is supplied from the ink chamber 42 via opening 44, is connected further to the ink emitting head 27. The ink outlet duct 43 is extended from the bottom side of the ink chamber 42 to the ink emitting head 27.

The valve 45 closes the opening 44 to separate the side of the ink inlet duct 41 from the side of the ink outlet duct 43, and is provided within the ink chamber 42. The valve 45 is moved in the up-and-down direction under the bias of the biasing member 46, the force of restoration of the diaphragm 49, connected to the valve shaft 48, and under the negative pressure of the ink 2 on the side of the ink outlet duct 43. When at the lowermost position, the valve 45 closes the opening 44 for dividing the ink chamber 42 into the ink inlet duct side and the ink outlet duct side to interrupt the supply of the ink 2 to the ink outlet duct 43. When at the uppermost position, against the bias of the biasing member 46, the valve 45 permits the ink 2 to be supplied to the ink emitting head 27, without interrupting the ink inlet duct 41 and the ink outlet duct 43 from each other in the ink chamber 42. Although there is no limitation to the type of the material of the valve 45, it is formed of a rubber elastic material, especially an elastomeric material.

The biasing member 46 is e.g. a compression coil spring interconnecting the negative pressure adjustment screw 47 and the valve 45 between the upper surface of the valve 45 and the upper surface of the ink chamber 42. The biasing member biases the valve 45 in the direction of closing the opening 44 under its biasing force. The negative pressure adjustment screw 47 is used for adjusting the bias force of the biasing member 46, such that, by adjusting the negative pressure adjustment screw 47, it is possible to adjust the biasing force of the biasing member 46. Thus, with the negative pressure adjustment screw 47, it is possible to adjust the negative pressure of the ink 2, which actuates the valve 45, which in turn opens or closes the opening 44, in a manner which will be explained subsequently in detail.

The valve shaft 48 interconnects the valve 45, connected to its one end, and the diaphragm 49, connected to the other end thereof, for interlocked operation between the two members. The diaphragm 49 is a thin elastic plate connected to the other end of the valve shaft 48. The diaphragm 49 has an end facing the ink outlet duct 43 of the ink chamber 42 and a face contacted with outside air and is elastically deformed to the outside air side and to the side of the ink outlet duct 43 under the atmospheric pressure and the negative pressure of the ink 2.

With the above-described valving mechanism 34, the valve 45 is pressed by the biasing force of the biasing member 46 and of the diaphragm 49 in a direction closing the opening 44 of the ink chamber 42, as shown in Fig.7A. When the ink 2 is ejected from the ink emitting head 27, and the negative pressure of the ink 2 in the side of the ink outlet duct 43 in the ink chamber 42, divided by the opening 44, is raised, the diaphragm 49 is uplifted under the atmospheric pressure and under the negative pressure of the ink 2. Hence, the valve 45 is uplifted, along with the valve shaft 48, against the bias of the biasing member 46. At this time, the opening 44 between the ink inlet duct 41 and the ink outlet duct 43 in the ink chamber 42 is opened to supply the ink 2 from the ink inlet duct 41 to the ink outlet duct 43. The negative pressure of the ink 2 is lowered and the diaphragm 49 is restored by its force of restoration to its original shape. The valve 45 is lowered, along with the valve shaft 48, for closing the ink chamber 42, under the bias of the biasing member 46. In the valve unit 34, the above sequence of operations is repeated each time the ink 2 is emitted and hence the negative pressure of the ink 2 is raised.

In the connecting part 26, the quantity of the ink 2 in the ink container 12 is decreased when the ink 2 in the ink container 12 is supplied to the ink chamber 42. At this time, outside air is intruded from the inlet duct 15 into the ink tank 5. The ink intruded into the ink tank 5 is forwarded to an upper part of the ink tank 5. This restores the state before the ink droplet i is emitted from the nozzle 52a to establish the equilibrium state. The equilibrium state is established at this time in such a state tnat there is scarcely any ink 2 in the inlet duct 15.

The connecting part 26 has a complex structure as described above and the ink 2 is moved through the inside of this complex valve unit 34. However, since EBPD-EO and EOPOEO are contained in the ink 2 as described above, fine bubbles are suppressed from being generated in the ink 2 when the valving mechanism 34 is opened/ closed or when the ink 2 is moved through the inside of the valving mechanism 34. Thus, the ink 2 not mixed with fine bubbles may be supplied to the ink emitting head 27. Moreover, since EBPD-EO and EOPOEO are contained in the ink 2, the ink displays superior wettability with respect to the connecting part 26, so that fine bubbles are not deposited on the inner surface of the valving mechanism 34 or on that of the ink outlet duct 43 and may be moved smoothly so as to be emitted readily from the nozzle 52a along with the ink 2.

The ink emitting head 27 is arranged along the bottom surface of the cartridge proper 21, as shown in Fig.6. The nozzles 52a, as emitting openings for emitting the ink liquid droplets i from the connecting parts 26, as will be described later, are arranged substantially in a line, from color to color, along the width of the recording paper sheet P, for extending along the width of the recording paper sheet P, that is, in the direction indicated by arrow W in Fig.6.

The head cap 28 is provided for protecting the ink emitting head 27, as shown in Fig.2, and is retreated from the ink emitting head 27 in case of printing. The head cap 28 includes a pair of engagement projections 28a, provided in the opening/ closing direction on both ends of the ink emitting head along the direction of arrow W in Fig.2, and a cleaning roll 28b provided for extending longitudinally for sucking excess ink 2 deposited on an emitting surface 27a of the ink emitting head 27. The head cap 28 has the engagement projections 28a engaged with a pair of engagement grooves 27b provided in the emitting surface 27a of the ink emitting head 27 for extending in a direction substantially at right angles to the direction of arrow W in Fig.2 and is moved for opening/ closure in a direction along the short side direction of the ink tank 5, that is, in a direction substantially perpendicular to the direction of arrow W in Fig.2. During the opening/ closure, the head cap 28 cleans the emitting surface 27a of the ink emitting head 27, as the cleaning roll 28b is rotated in abutting contact with the emitting surface 27a of the ink emitting head 27 to take up excess ink 2. This cleaning roll 28b is formed of a highly hygroscopic material, specifically, a sponge, non-woven cloth or woven cloth. When the printing is not being carried out, the head cap 28 closes the emitting surface 27a to prevent desiccation of the ink 2 in the emitting surface 27a.

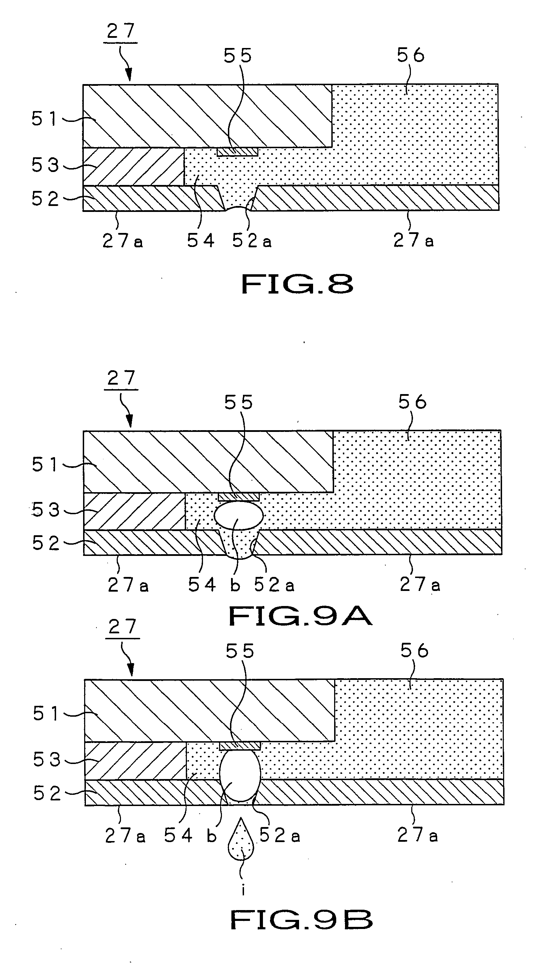

Referring to Fig. 8, the ink emitting head 27 includes a circuit substrate 51, as base, a nozzle sheet 52, provided with a number of the nozzles 52a, and a film 53 for separating the circuit substrate 51 from the nozzle sheet 52 from one nozzle 52a to another. The ink emitting head 27 also includes an ink liquid chamber 54 for pressurizing the ink 2 supplied via ink outlet duct 43, a heating resistor 55 for heating the ink 2 supplied into the ink liquid chamber 54 and an ink duct 56 for supplying the ink 2 to the ink liquid chamber 54.

The circuit substrate 51 includes a semiconductor wafer, formed of, for example, silicon, and a control circuit, provided with a logic IC (Integrated Circuit) or a driver transistor, and forms an upper surface of the ink liquid chamber 54.

The nozzle sheet 52 has a thickness on the order of 10 to 15 µm, and includes the nozzle 52a having a diameter reduced towards the emitting surface 27a, with the nozzle size on the emitting surface 27a being on the order of 20 µm. The nozzle sheet 52 is arranged facing the circuit substrate 51 with the film 53 in-between to form the lower surface of the ink liquid chamber 54.

The film 53 is e.g. an exposure curing type dry film resist and is formed for surrounding the perimeter of the nozzle 52a with the exception of the portion of the ink emitting head communicating with the ink outlet duct 43. The film 43 also is interposed between the circuit substrate 51 and the nozzle sheet 52 to form the lateral surface of the ink liquid chamber 54.

The ink liquid chamber 54 is surrounded by the circuit substrate 51, nozzle sheet 52 and the film 53 to form a space for pressurizing the ink 2 supplied from the ink outlet duct 43 from one nozzle 52a to another.

The heating resistor 55 is arranged on the circuit substrate 51 facing the ink liquid chamber 54 and is electrically connected to a control circuit provided on the circuit substrate 51. The heating resistor 55 is heated under control by e.g. a control circuit to heat the ink 2 in the ink liquid chamber 54.

The ink duct 56 is connected to the ink outlet duct 43 of the connecting part 26 and is supplied with the ink 2 from the ink tank 5 connected to the connecting part 26 to send the ink 2 into each ink liquid chamber 54 communicating with the ink duct 56. That is, the ink duct 56 communicates with the connecting part 26. Thus, the ink 2, supplied from the ink tank 5, flows into the ink duct 56 so as to be charged into the ink liquid chamber 54.

The ink emitting head 27 is provided with 100 to 5000 ink liquid chambers 54, each provided with the heating resistor 55, per each color ink tank 5. That is, the heating resistor 55 is provided in each ink liquid chamber 54. In the ink emitting head 27, each heating resistor 55 in each ink liquid chamber 54 is selected and heated, under a command from a controlling 78 of the printer apparatus 1, as later described. The ink 2 in each ink liquid chamber 54, associated with the so heated heating resistor 55, is emitted as an ink liquid droplet i from the nozzle 52a associated with the ink liquid chamber 54.

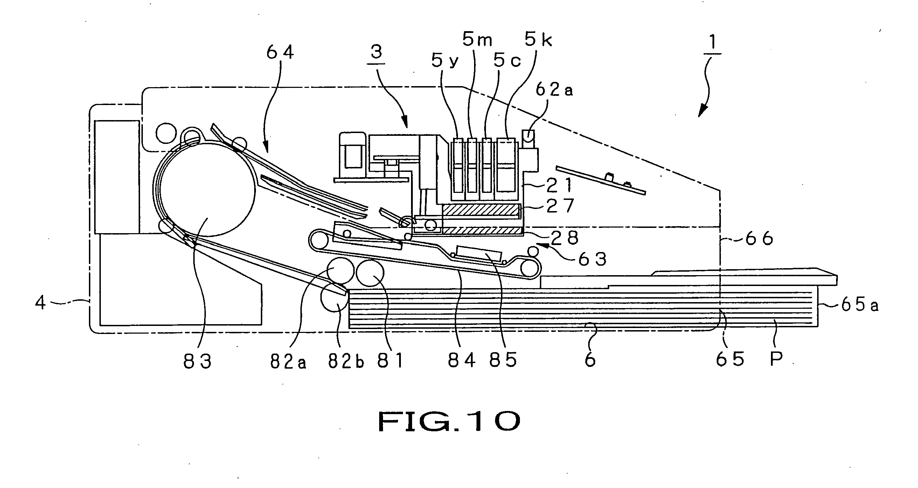

Specifically, with the present ink emitting head 27, a control circuit of the circuit substrate 51 controls the driving of the heating resistor 55 to supply the pulse current of e.g. 1 to 3 µsec to the selected heating resistor 55. This quickly heats the heating resistor 55 in the ink emitting head 27. Then, in the ink emitting head 27, an air bubble b is generated in the ink 2 in the ink liquid chamber 54 contacted with the heating resistor 55, as shown in Fig.9A. In the ink liquid chamber 54 of the ink emitting head 27, the air bubble b pressurizes the ink 2, as the air bubble is expanded, and the ink 2, thus displaced, is turned into an ink liquid droplet i which is emitted from the nozzle 52a. After emission of the ink liquid droplet i, the ink 2 is supplied to the ink liquid chamber 54 through the ink outlet duct 43, in the ink emitting head 27, so that the pre-emission state is again reached.

With the above-described ink emitting head 27, the number of points of heat generation is increased by a value equal to the number of the heating resistors 55, so that fine bubbles are more liable to be produced. However, since EBPD-EO and EOPOEO are contained in the ink 2 as described above, it is possible to suppress fine bubbles from being generated in the ink 2 in the ink liquid chamber 54 and emission defects such as non-emission or bent emission may be prohibited from occurring.

In addition, in the ink emitting head 27, EBPD-EO and EOPOEO are evenly dissolved in the ink 2, without the state of EBPD-EO and EOPOEO being changed when the temperature of the ink 2 is increased from the ambient temperature state due to the heating resistor 55. Hence, the ink 2 does not become turbid in the ink emitting head 27, with the physical properties of the ink 2 remaining stable.

The printer proper 4, constituting the printer apparatus 1, on which the above-described head cartridge 3 is mounted, will now be described with reference to the drawings.

Referring to Figs.1 and 10, the printer proper 4 includes a head cartridge mounting section 61, the head cartridge 3 is mounted to, and a cartridge holding mechanism 62 for holding and securing the head cartridge 3 to the head cartridge mounting section 61. The printer proper 4 also includes a head cap opening/ closing mechanism 63 for opening/ closing the head cap 28 and a paper sheet feed/discharge mechanism 64 for feeding/ discharging the recording paper sheet P. The printer proper 4 further includes a paper sheet feed port 65 for supplying the recording paper sheet P to the paper sheet feed/ discharge mechanism 64 and a paper sheet discharge port 66 for outputting the recording paper sheet P from the paper sheet feed/ discharge mechanism 64.

The head cartridge mounting section 61 is a recess in which to mount the head cartridge 3. The head cartridge 3 is mounted so that the emitting surface 27a of the ink emitting head 27 will be parallel to the sheet surface of the running recording paper sheet P, so that data printing will be carried out correctly on the running recording paper sheet. It is noted that the head cartridge 3 may need to be replaced due to e.g. ink clogging in the ink emitting head 27, and is a consumable article, although the head cartridge need not be exchanged so often as the ink tank 5. Hence, the head cartridge is held detachably by the cartridge holding mechanism 62 with respect to the head cartridge mounting section 61.

The cartridge holding mechanism 62 is a mechanism for detachably holding the head cartridge 3 with respect to the head cartridge mounting section 61. A knob 62 provided on the head cartridge 3 is retained by a biasing member, such as a spring, not shown, provided in a retention opening 62b of the printer proper 4, so that the knob may be pressed against a reference surface 4a provided in the printer proper 4 for holding and securing the head cartridge 3 in position.

The head cap opening/ closing mechanism 63 includes a driving unit for opening/closing the head cap 28 of the head cartridge 3. For printing, the head cap opening/ closing unit opens the head cap 28 to expose the ink emitting head 27 to the recording paper sheet P and, on completion of printing, the head cap opening/closing unit closes the head cap 28 to to protect the ink emitting head 27.

The paper sheet feed/ discharge mechanism 64 includes a driving unit for transporting the recording paper sheet P. Thus, the paper sheet feed/ discharge mechanism transports the recording paper sheet P, supplied from the paper sheet feed port 65, to the ink emitting head 27 of the head cartridge 3, and then transports the recording paper sheet P, carrying thereon the ink liquid droplet i, emitted from the nozzle 52a, to the paper sheet discharge port 66, to discharge the printed paper sheet to outside the printer apparatus. The paper sheet feed port 65 is an opening via which the recording paper sheet P is supplied to the paper sheet feed/ discharge mechanism 64. A plural number of the recording paper sheets P may be stacked on e.g. the tray 65a. The paper sheet discharge port 66 is an opening via which to discharge the paper sheet P on which the ink liquid droplet i has been deposited to complete the printing.

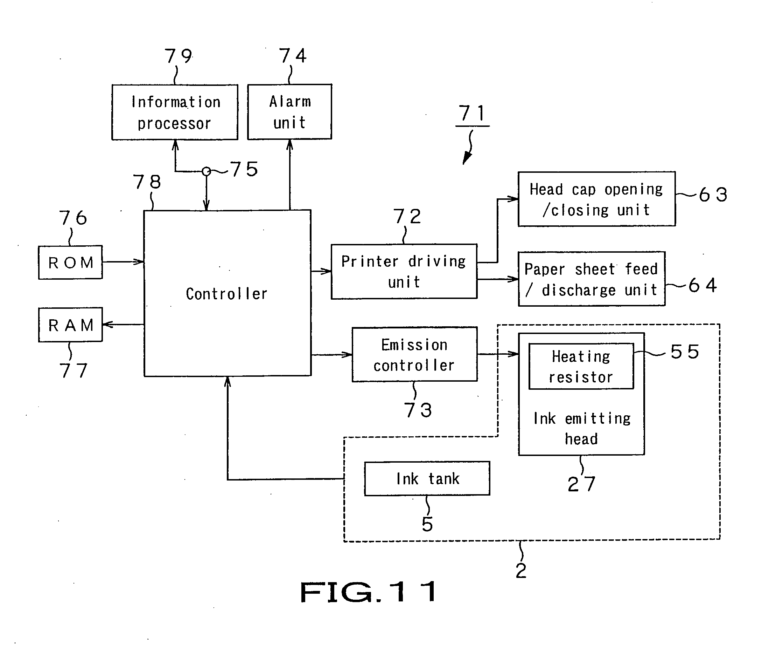

A control circuit 71 for controlling the printing by the above-described printer apparatus 1, shown in Fig. 11, will now be described with reference to the drawings.

The control circuit 71 includes a printer driving unit 72 for controlling the driving of the head cap opening/ closing mechanism 63 and the paper sheet feed/discharge mechanism 64, an emission controller 73 for controlling e.g. the current supplied to the ink emitting head 27, associated with each color ink i, and a alarm unit 74 for alarming the residual quantity of the ink i of each color. The control circuit 71 also includes an input/output terminal 75 for inputting/ outputting signals for an external device, a ROM (Read-Only Memory) having recorded e.g. a control program, a RAM (Random Access Memory) 77 for transient storage of e.g. the control program read out and for readout thereof as necessary, and a controller 78 for performing various control operations.

The printer driving unit 72 actuates a driving motor constituting the head cap opening/ closing mechanism 63, based on a control signal from the controller 78, to control the head cap opening/ closing mechanism 63 for opening/ closing the head cap 28. The printer driving unit 72 also actuates the driving motor constituting the head cap opening/ closing mechanism 63, based on a control signal from the controlling 78, to control the head cap opening/ closing mechanism. The printer driver 72 actuates the driving motor constituting the paper sheet feed/ discharge mechanism 64, under control from the controller 78, so that the recording paper sheet P will be supplied via paper sheet feed port 65 of the printer proper 4 to discharge the printed recording paper sheet P via paper sheet discharge port 66 after printing.

The emission controller 73 is an electrical circuit including switching devices for turning on/off of electrical connections to an external power supply adapted for for supplying pulsed current to the heating resistor 55 provided on the ink emitting head 27. The emission controller also includes a control circuit for turning on/off of a resistor for adjusting the pulsed current supplied to the heating resistor 55 or switching devices. The emission controller 73 adjusts e.g. the pulsed current supplied to the heating resistor 55 provided to the ink emitting head 27, in accordance with a cons; from the controller 78, to control the ink emitting head 27 adapted for emitting the ink 2 via nozzle 52a.

The alarm unit 74 is e.g. an alarm means, such as LCD (Liquid Crystal Display), and demonstrates the information such as printing conditions, printing states and a residual ink quantity. This alarm may be made on a monitor of an information processor 79 or by a loudspeaker.

The input/output terminal 75 transmits the information, such as the aforementioned printing conditions, printing state or the residual ink quantity via interface to e.g. the external information processor 79. The input/output terminal 75 also receives, from the external device, such as information processor 79, e.g. the printing data or the control signal for outputting the information, such as the information processor 79 is e.g. a electronic apparatus, such as printing state or the residual ink quantity. The information processor 79 may, for example, be a personal computer or PDA (Personal digital Assistant).

The input/output terminal 75, connected to e.g. the information processor 79, may use e.g. a serial interface or a parallel interface, as an interface. The input/output terminal 75 may also have data communication, via wired or wireless communication, with the information processor 79. A network, such as the Internet, may be interposed between the input/output terminal 75 and the information processor 79.

The ROM 76 is a memory, such as EP-ROM (Erasable Programmable Read-Only Memory), and has stored therein various programs for processing operations carried out by the controller 78. The programs stored are loaded on the RAM 77 by the controller 78. The RAM 77 holds on memory a variety of states of the printer apparatus 1 and programs read out from the ROM 76 by the controller 78.

The controller 78 controls various parts based on e.g. printing data received from the input/output terminal 75 and on data on the residual quantity of the ink 2 received from the head cartridge 3. The controller 78 reads out processing programs, controlling various components, based on e.g. an input control signal, to hold the so read out programs in the RAM 77 to perform control or processing for various parts based on this control program.

In the control circuit 71, described above, the processing program is stored in the ROM 76. However, the medium in which to store the processing program is not limited to the ROM 76, and may also be a variety of recording mediums, such as an optical disc, a magnetic disc, a magneto-optical disc or an IC card, having processing programs recorded thereon. In this case, the control circuit 71 is connected with a drive actuating the recording mediums either directly or via information processor 79 to read out processing programs from these recording mediums.

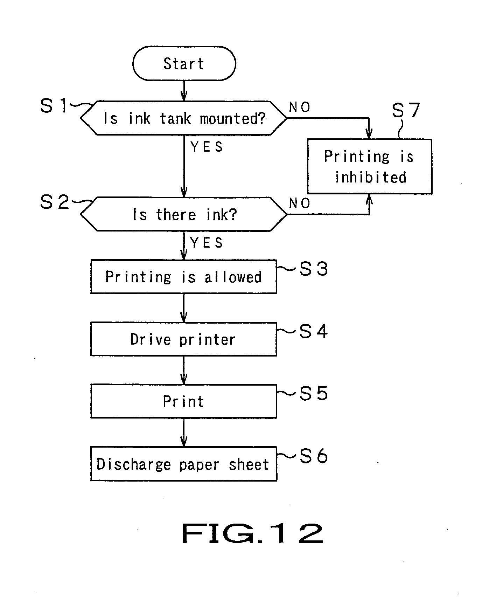

The printing operation of the printer apparatus 1, described above, will now be described with reference to the flowchart shown in Fig. 12. It is noted that the present operation is executed by e.g. the computing processing by a CPU (Central Processing Unit), not shown, provided in the controller 78, in accordance with a processing program stored in a memory, such as ROM 76.

Initially, a user commands e.g. an operation panel provided on the printer proper 4, in order for the printer apparatus 1 to carry out the printing operation. The controller 78 then verifies, in a step S1, whether or not the ink tanks of preset colors have been mounted in the respective mounting sections 22. If the ink tanks of the preset colors have been mounted in all of the mounting sections 22, the controller 78 proceeds to a step S2. If the ink tanks of the preset colors have not been mounted in the mounting sections 22, the controller 78 proceeds to a step S7 to inhibit the printing operation.

In a step S2, the controller 78 verifies whether or not the quantity of the ink 2 in the ink tank 5 is less than a preset value, that is, whether or not there is no ink. If it is verified that there is no ink, the controller 78 causes the alarm unit 74 to issue an alarm to that effect and, in a step S7, inhibits the printing operation. If there is more than a preset quantity of the ink 2 in the ink tank 5, that is, the ink tank 5 is filled with the ink 2, the controller 78 in a step S3 allows for a printing operation.

In case the printing operation is to be performed, the controller 78 causes the driving unit 72 to control the driving of the head cap opening/ closing mechanism 63 and the paper sheet feed/ discharge mechanism 64 to cause movement of the recording paper sheet P to a printing position. Referring specifically to Fig. 12, the controller 78 actuates the driving motor, constituting the head cap opening/ closing mechanism 63, to cause movement of the head cap 28 towards the tray 65a with respect to the head cartridge 3 to expose the nozzle 52a of the ink emitting head 27. The controller 78 actuates the driving motor, constituting the paper sheet feed/discharge mechanism 64, to cause movement of the recording paper sheet P. More specifically, the controller 78 controls the paper sheet feed/ discharge mechanism 64 to pull out the recording paper sheet P from the tray 52a by a paper sheet feed roll 81, and transports the so pulled out recording paper sheet P by a pair of separator rolls 82a, 82b rotating in opposite directions to a reversing roll 83 to reverse the transporting direction of the recording paper sheet P. The recording paper sheet P, reversed in the transporting direction, is transported to a conveyor belt 84. The recording paper sheet P, thus transported to the conveyor belt 84, is retained by retention means 85 at a predetermined position for setting the position of deposition of the ink 2 thereon.

The controller 78 in a step S4 controls the ink emitting head 27 by the emission controller 73 to cause the ink liquid droplet i to be emitted and deposited from the nozzle 52a on the recording paper sheet P, transported to the printing position, to record e.g. an image or a letter/ character of ink dots.

Since EBPD-EO and EOPOEO, described above, are contained in the ink 2, in the ink emitting head 27, it is possible to suppress fine bubbles from being generated as a result of the opening/ closing operation of the valving mechanism 34 or ink movement in the ink outlet duct 43 to prevent the nozzle 52a from being stopped up with the fine bubbles. Thus, in the ink emitting head 27, it is possible to prevent emission defects, such as non-emission or bent emission of the ink liquid droplet i.

Moreover, even in case where fine bubbles are generated in the ink emitting head 27 and become affixed to the inner surface of the valving mechanism 34 or the ink outlet duct 43, the ink 2 is improved in wettability by EBPD-EO and EOPOEO contained therein, and hence the fine bubbles may readily be moved to and readily discharged from the nozzle 52a along with the ink liquid droplet i.

Moreover, since EBPD-EO and EOPOEO are contained in the ink 2 in the ink emitting head 27, the ink 2 is improved in optical density and the boundary bleeding or all-over color mixing or speckling is suppressed to provide a high quality image.

When the ink liquid droplet i is emitted from the nozzle 52a, a quantity of the ink 2 which is the same as the quantity of the ink liquid droplet i emitted is readily supplemented from the ink duct 56 into the ink liquid chamber 54 to restore the original state, as shown in Fig.7A. When the ink liquid droplet i is emitted from the ink emitting head 27, and hence the negative pressure of the ink 2 in the ink outlet duct 43, defined by the opening 44, is increased, the diaphragm 49 is uplifted by atmospheric pressure under the negative pressure of the ink 2 (Fig.7B). Hence, the valve 45, which has so far closed the opening 44 of the ink chamber 42 under the bias of the biasing member 46 and the diaphragm, is uplifted, along with the vale shaft 48, against the bias of the diaphragm 46. At this time, the opening 44 between the ink inlet duct 41 and the ink outlet duct 43 in the ink chamber 42 is opened so that the ink 2 is supplied from the ink inlet duct 41 to the ink outlet duct 43 and replenished into the ink duct 56 of the ink emitting head 27. As the negative pressure of the ink 2 is decreased, the diaphragm 49 is elastically restored to its original shape, and hence the valve 45 is lowered, along with the valve shaft 48, under the bias of the biasing member 46, for closing the ink chamber 42. The valving mechanism 34 repeats the above sequence of operations each time the ink liquid droplet i is emitted and hence the negative pressure of the ink 2 is raised.

Since EBPD-EO and EOPOEO are contained in the ink 2, fine bubbles may be suppressed from being generated in the ink 2, traveling through the valving mechanism 34, even in case the ink 2 is repeatedly supplied by the valving mechanism 34 in the ink emitting head 27, that is, in case the ink 2 is repeatedly supplied through the inside of the valving mechanism 34 having a complicated structure. Thus, in the ink emitting head 27, the nozzle 52a is not stopped up with the bubble when the next ink liquid droplet i is emitted, so that it is possible to prevent non-emission or emission defects of the ink 2 and the ink liquid droplet i may be emitted in stability in a preset direction.

In this manner, letters/characters or images corresponding to printing data may sequentially be printed to high printing quality on the recording paper sheet P traveling by the paper sheet feed/ discharge mechanism 64. On completion of printing, the recording paper sheet P is discharged in a step S6 via paper sheet discharge port 66 by the paper sheet feed/ discharge mechanism 64.

In the above-described printer apparatus 1, in which fine bubbles are suppressed from being generated in the ink 2 in the ink tank 5, containing EBPD-EO and EOPOEO, there is no non-emission or emission defects of the ink liquid droplet i, so that the ink liquid droplet i can be emitted in stability in a preset direction. Hence, with the printer apparatus 1, an image or a letter/character may be printed to high quality, while no blurred portions or no-printed portions are generated in the image.

The printer apparatus 1 emits the ink liquid droplet i containing EBPD-EO and EOPOEO and exhibiting high wettability. Hence, it is possible to print a high-quality image in which boundary bleeding or all-over color mixing and speckling may be suppressed and which has a high optical density.

Moreover, when the ink liquid droplet i is emitted, the ink 2 is heated by the heating resistor 55 of the printer apparatus 1, so that the temperature of the ink 2 rises from the ambient temperature. However, since EOPOEO is not changed in physical properties, the ink 2 is not deteriorated in physical properties and prevented from becoming turbid.

Meanwhile, in the above-described head cartridge 3, the ink tank 5 may be dismounted from the cartridge proper 12. However, the present invention is not restricted to this configuration. That is, the head cartridge 3 itself is treated as a consumable article and may be dismounted from the printer proper 3. It is therefore possible to have ink tank 5 unified to the cartridge proper 12.

In the foregoing, the present invention is applied to a printer apparatus. However, the present invention is not limited to the above-described embodiment and may broadly be applied to other liquid emitting apparatus, such as facsimile or copying machines, a apparatus for emitting DNA chips into a liquid (see JP Laid-Open Patent Publication 2002-253200), or to a liquid emitting apparatus for emitting liquid containing electrically conductive particles for forming a wiring pattern on a printed wiring board.

In the foregoing, the ink emitting head 27 in which the heating resistor 55 heats the ink 2 to emit the so heated ink 2 has been described. The present invention is not limited to this configuration and may be applied to a liquid emitting apparatus having a plural number of pressurizing devices and which is capable of supplying different amounts of the energy or supplying the energy at different timings to the respective pressurizing devices for controlling the emitting directions.

In the foregoing, an electro-thermal conversion system, in which the heating resistor 55 heats the ink 2 to emit the ink from the nozzle 52a is used. The present invention is not limited to this configuration and may be applied to an electro-mechanical conversion system, in which the ink is electro-mechanically discharged from the nozzle using an electro- mechanical transducer, such as piezo device (JP Laid-Open Patent Publications S55-65559, S62-160243 and H2-270561).

Also, in the foregoing, the line printer apparatus 1 has been taken as an instance for description. This is not restrictive and the present invention may also be applied to a serial liquid emission apparatus in which the ink head is moved in a direction substantially perpendicular to the running direction of the recording paper sheet P.

### [Examples]

The present invention will now be described with reference to Examples and Comparative Examples in which the ink according to the present invention is actually fabricated.

### (Example 1)

In the Example 1, a magenta-based ink was prepared. In preparing the magenta-based ink, 3 parts by weight of C.I. Acid red 52, as a dye, 75.5 parts by weight of water, as a solvent, 10 parts by weight of glycerin, 5 parts by weight of 1,3- butanediol and 5 parts by weight of neopentylglycol, as other solvents, 0.8 part by weight of an ethylene oxide adduct of 2-ethyl-2-butyl-1,3-propanediol (referred to below as EBPD-EO), represented by the chemical formula (5) below, with m+n = 10, and 0.7 part by weight of an ethylene oxide/ propylene oxide copolymer (referred to below as EOPOEO), represented by the chemical formula (6), with x+z = 3 and y = 8, and with the EO content being 22.1 wt%, were mixed together. The resulting mass was filtered through a membrane filter, with a pore size of 0.22µm, manufactured by MILLIPORE Inc. under the trade name of Millex-0.22, to prepare a magenta-based ink. 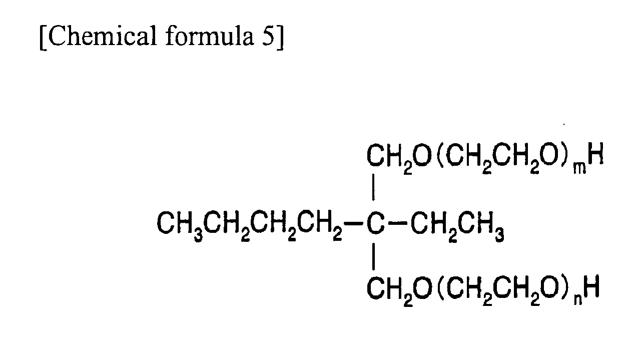 where m and n are each an integer of from 0 to 10, with 1 ≤ m+n ≤ 10 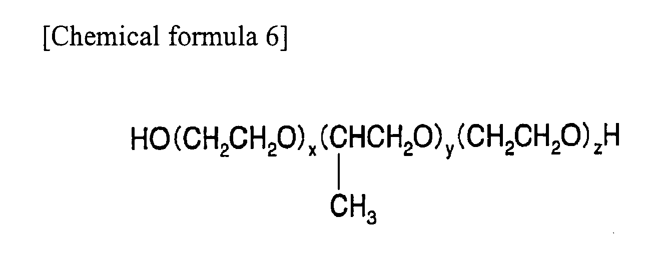 where x, y and z are each an integer such that 3 < x+z ≤ 12 and 8 ≤ y ≤ 21 and the content of an ethylene oxide in the molecule is 20 to 40 wt%.

A cyan-based ink was then prepared. In preparing the cyan-based ink, 2.5 parts by weight of C.I. Direct Blue 199, as a dye, 76 parts by weight of water, as a solvent, 10 parts by weight of glycerin, 5 parts by weight of 1,3- butanediol and 5 parts by weight of neopentylglycol, as other solvents, 0.8 part by weight of EBPD-EO, with m+n = 10, and 0.7 part by weight of EOPOEO, with x+z = 3 and y = 8, and with the EO content being 22.1 wt%, were mixed together. The resulting mass was filtered through a membrane filter, with a pore size of 0.22 µm, manufactured by MILLIPORE Inc. under the trade name of Millex-0.22, to prepare a cyan-based ink. Meanwhile, in the magenta-based ink and in the cyan-based ink, EOPOEO corresponds to P3 in Fig.4 showing the relationship between the EO content and the total molecular weight of PO in EOPOEO.

### <Example 2>

In Example 2, the magenta-based ink and the cyan-based ink were prepared in the same way in Example 1 for the magenta-based ink and the cyan-based ink, except using EBPD-EO with m+n = 4. Meanwhile, in the magenta-based ink and in the cyan-based ink, EOPOEO corresponds to P3 in Fig.4 showing the relationship between the EO content and the total molecular weight of PO in EOPOEO.

### <Example 3>

In Example 3, the magenta-based ink and the cyan-based ink were prepared in the same way in Example 1 for the magenta-based ink and the cyan-based ink, except using EBPD-EO with m+n = 2. Meanwhile, in the magenta-based ink and in the cyan-based ink, EOPOEO corresponds to P3 in Fig.4 showing the relationship between the EO content and the total molecular weight of PO in EOPOEO.

### <Example 4>

In Example 4, the magenta-based ink and the cyan-based ink were prepared in the same way in Example 1 for the magenta-based ink and the cyan-based ink, except using EBPD-EO where m+n = 2 and also except using EOPOEA where x+z =5 and y = 8. Meanwhile, in the magenta-based ink and in the cyan-based ink, EOPOEO corresponds to P7 in Fig.4 showing the relationship between the EO content and the total molecular weight of PO in EOPOEO.

### <Example 5>

In Example 5, the magenta-based ink and the cyan-based ink were prepared in the same way in Example 1 for the magenta-based ink and the cyan-based ink, except using EBPD-EO where m+n = 2 and also except using EOPOEO where x+z = 4 and y = 12 and the EO content is 20.2 wt%. Meanwhile, in the magenta-based ink and in the cyan-based ink, EOPOEO corresponds to P 1 in Fig.4 showing the relationship between the EO content and the total molecular weight of PO in EOPOEO.

### <Example 6>

In Example 6, the magenta-based ink and the cyan-based ink were prepared in the same way in Example 1 for the magenta-based ink and the cyan-based ink, except using EBPD-EO where m+n = 2 and also except using EOPOEO where x+z = 7 and y = 12, and the EO content is 30.7 wt%. Meanwhile, in the magenta-based ink and in the cyan-based ink, EOPOEO corresponds to P4 in Fig.4 showing the relationship between the EO content and the total molecular weight of PO in EOPOEO.

### <Example 7>

In Example 7, the magenta-based ink and the cyan-based ink were prepared in the same way in Example 1 for the magenta-based ink and the cyan-based ink, except using EBPD-EO with m+n = 2 and also except using EOPOEO where x+z = 9 and y = 16 and the EO content is 29.9 wt%. Meanwhile, in the magenta-based ink and in the cyan-based ink, EOPOEO corresponds to P5 in Fig.4 showing the relationship between the EO content and the total molecular weight of PO in EOPOEO.

### <Example 8>

In Example 8, the magenta-based ink and the cyan-based ink were prepared in the same way in Example 8 for the magenta-based ink and the cyan-based ink, except using EBPD-EO with m+n = 6 and also using EOPOEO where x+z = 12 and y = 21 and the EO content is 30.2 wt%. Meanwhile, in the magenta-based ink and in the cyan-based ink, EOPOEO corresponds to P6 in Fig.4 showing the relationship between the EO content and the total molecular weight of PO in EOPOEO.

### <Comparative Example 1 >

In Comparative Example 1, the magenta-based ink and the cyan-based ink were prepared in the same way in Example 1 for the magenta-based ink and the cyan-based ink, except not using EBPD-EO, except using EOPOEO with x+z = 3 and y = 8, and with the EO content of 22.1 wt%, and also except setting the content of water to 76.3 wt%. Meanwhile, in the magenta-based ink and in the cyan-based ink, EOPOEO corresponds to P3 in Fig.4 showing the relationship between the EO content and the total molecular weight of PO in EOPOEO.

### <Comparative Example 2>

In the Comparative Example 2, a magenta-based ink and a cyan-based ink were prepared in the same way as in Example 1 for the magenta-based and the cyan-based ink, except using EBPD-EO with m+n = 10, except not using EOPOEO and also except setting water to 76.4 wt%.

### <Comparative Example 3>

In the Comparative Example 3, a magenta-based ink and a cyan-based ink were prepared in the same way as in Example 1 for the magenta-based and the cyan-based ink, except using neither EBPD-EO nor EOPOEO and also except setting water to 77 wt%.

### <Comparative Example 4>

In the Comparative Example 4, a magenta-based ink and a cyan-based ink were prepared in the same way as in Example 1 for the magenta-based and the cyan-based ink, except using EBPD-EO with m+n = 4 and except using EOPOEO with x+z = 9 and y = 9 and with the EO content of 43.1 wt%. Meanwhile, in the magenta-based ink and in the cyan-based ink, EOPOEO corresponds to P15 in Fig.4 showing the relationship between the EO content and the total molecular weight of PO in EOPOEO.

### <Comparative Example 5>

In the Comparative Example 5, a magenta-based ink and a cyan-based ink were prepared in the same way as in Example 1 for the magenta-based and the cyan-based ink, except using EBPD-EO with m+n = 4 and except using EOPOEO with x+z = 4 and y = 13 and with the EO content of 18.9 wt%. Meanwhile, in the magenta-based ink and in the cyan-based ink, EOPOEO corresponds to P11 in Fig.4 showing the relationship between the EO content and the total molecular weight of PO in EOPOEO.

### <Comparative Example 6>

In the Comparative Example 6, a magenta-based and a cyan-based ink were prepared in the same way as in Example 1 for the magenta-based and the cyan-based ink, except using EBPD-EO with m+n = 14 and except using EOPOEO with x+z = 3 and y = 8 and with the EO content of 22.1 wt%. Meanwhile, in the magenta-based ink and in the cyan-based ink, EOPOEO corresponds to P3 in Fig.4 showing the relationship between the EO content and the total molecular weight of PO in EOPOEO.

### <Comparative Example 7>

In the Comparative Example 7, a magenta-based and a cyan-based ink were prepared in the same way as in Example 1 for the magenta-based and the cyan-based ink, except using 0.5 part by weight of an ethylene oxide adduct of acetylene glycol (manufactured by NISSHIN KAGAKU under the trade name of Olfine E1010) and using 76.5 parts by weight of water.

For the inks of the Examples and the Comparative Examples, the dynamic surface tension at 20 Hz (γ₂₀) and the dynamic surface tension at 1 Hz (γ₁) were measured under measurement conditions of 25°C atmosphere and a capillary diameter of 0.215 mm, using a bubble pressure dynamic surface tension meter (BP-2) manufactured by KRUSS. The results are shown in the following Table 2.

**Table 2**

| | Color | EBPD-EO | EOPOEO | | EO content (%) | Dynamic surface tension | |
|---|---|---|---|---|---|---|---|
| | | m+n | x+z | Y | | γ₂₀ | Γ₁ |
| Ex. 1 | Magenta | 10 | 3 | 8 | 22.1 | 42 | 39.2 |
| | Cyan | 10 | 3 | 8 | 22.1 | 41 | 38.9 |
| Ex. 2 | Magenta | 4 | 3 | 8 | 22.1 | 39 | 37.5 |
| | Cyan | 4 | 3 | 8 | 22.1 | 38.5 | 36.5 |
| Ex. 3 | Magenta | 2 | 3 | 8 | 22.1 | 37.5 | 35.1 |
| | Cyan | 2 | 3 | 8 | 22.1 | 37 | 34 |
| Ex. 4 | Magenta | 2 | 5 | 8 | 32.2 | 37 | 34 |
| | Cyan | 2 | 5 | 8 | 32.2 | 36.1 | 33 |
| Ex. 5 | Magenta | 2 | 4 | 12 | 20.2 | 37.2 | 34.1 |
| | Cyan | 2 | 4 | 12 | 20.2 | 36 | 33.2 |
| Ex. 6 | Magenta | 2 | 7 | 12 | 30.7 | 38 | 35.8 |
| | Cyan | 2 | 7 | 12 | 30.7 | 37.2 | 34.6 |
| Ex. 7 | Magenta | 2 | 9 | 16 | 29.9 | 39.5 | 36.1 |
| | Cyan | 2 | 9 | 16 | 29.9 | 38.1 | 35.5 |
| Ex. 8 | Magenta | 6 | 12 | 21 | 30.2 | 42.5 | 38.9 |
| | Cyan | 6 | 12 | 21 | 30.2 | 41.5 | 38.1 |
| Comp. Ex. 1 | Magenta | - | 3 | 8 | 22.1 | 49.8 | 47.1 |
| | Cyan | - | 3 | 8 | 22.1 | 48 | 46.2 |
| Comp. Ex. 2 | Magenta | 10 | - | - | - | 42.9 | 40 |
| | Cyan | 10 | - | - | - | 42 | 39.1 |
| Comp. Ex. 3 | Magenta | - | - | - | - | 52.5 | 52.4 |
| | Cyan | - | - | - | - | 51.2 | 51.1. |
| Comp. Ex. 4 | Magenta | 4 | 9 | 9 | 43.1 | 40.8 | 37.6 |
| | Cyan | 4 | 9 | 9 | 43.1 | 39.7 | 38.1 |
| Comp. Ex. 5 | Magenta | 4 | 4 | 13 | 18.9 | 40 | 37 |
| | Cyan | 4 | 4 | 13 | 18.9 | 38.8 | 36.9 |
| Comp. Ex. 6 | Magenta | 14 | 3 | 8 | 22.1 | 45.1 | 41.5 |
| | Cyan | 14 | 3 | 8 | 22.1 | 44.3 | 40.1 |
| Comp. Ex. 7 | Magenta | OLFINE E1010 | | | - | 38.1 | 35.5 |
| | Cyan | OLFINE E1010 | | | - | 37 | 34.4 |

Then, of the inks of the Examples and Comparative Examples, evaluation was made of emission stability, intermittent emission stability, optical density, boundary bleeding and all-over color mixing and speckling. The results are shown in the following Table 3.

**Table 3**

| | Color | Emission stability | Optical density | Boundary bleeding | All-over color mixing speckling |
|---|---|---|---|---|---|
| Ex. 1 | Magenta | ○ | 1.29 | ○ | ⊚ |
| | Cyan | ○ | 1.31 | | |
| Ex. 2 | Magenta | ⊚ | 1.3 | ⊚ | ⊚ |
| | Cyan | ⊚ | 1.34 | | |
| Ex. 3 | Magenta | ⊚ | 1.31 | ⊚ | ⊚ |
| | Cyan | ⊚ | 1.35 | | |
| Ex. 4 Ex.4 | Magenta | ⊚ | 1.31 | ⊚ | ⊚ |
| | Cyan | ⊚ | 1.35 | | |
| Ex. 5 | Magenta | ⊚ | 1.32 | ⊚ | ⊚ |
| | Cyan | ⊚ | 1.35 | | |
| Ex. 6 | Magenta | ⊚ | 1.32 | ⊚ | ⊚ |
| | Cyan | ⊚ | 1.33 | | |
| Ex. 7 | Magenta | ⊚ | 1.3 | ⊚ | ⊚ |
| | Cyan | ⊚ | 1.31 | | |
| Ex. 8 | Magenta | ○ | 1.26 | ○ | ⊚ |
| | Cyan | ○ | 1.29 | | |
| Comp. Ex. 1 | Magenta | Δ | 1.23 | × | × |
| | Cyan | Δ | 1.21 | | |
| Comp. Ex.2 | Magenta | × | 1.3 | Δ | Δ |
| | Cyan | × | 1.31 | | |
| Comp. Ex. 3 | Magenta | × | 1.2 | × | × |
| | Cyan | × | 1.21 | | |
| Comp. Ex.4 | Magenta | Δ | 1.28 | ○ | Δ |
| | Cyan | Δ | 1.29 | | |
| Comp. Ex. 5 | Magenta | × | 1.27 | ○ | Δ |
| | Cyan | × | 1.27 | | |
| Comp. Ex.6 | Magenta | Δ | 1.26 | Δ | Δ |
| | Cyan | Δ | 1.27 | | |
| Comp. Ex.7 | Magenta | Δ | 1.24 | Δ | × |
| | Cyan | Δ | 1.23 | | |

Meanwhile, the emission stability was evaluated as follows: The inks of the Examples and Comparative Examples were charged into ink tanks which were then mounted on a head cartridge. After ejecting the inks from a line ink jet printer apparatus, the head cartridge was dismounted from the ink jet printer apparatus and kept in an atmosphere of the temperature of 10°C and a relative humidity of 50% for five days and then in an atmosphere of the temperature of 40°C and a relative humidity of 50% for five days. The head cartridge was then exposed to an environment of the temperature of 20°C and a relative humidity of 50%. The head cartridge was again mounted on the line ink jet printer apparatus and used for performing so-called all-over printing, that is, printing with respective colors of preset regions of a copy sheet manufactured by MITSUBISHI SEISHI under the trade name of Mitsubishi-PPC. The ink tanks were dismounted from the head cartridge and visually checked to see whether or not fine bubbles were generated in the ink emitting heads 27. The printed image was also visually checked.

As for emission stability in Table 3, a case in which there is no unprinted region in the entire image and no fine bubbles of ink are generated in the ink in the ink emitting head 27 is denoted by a double circle mark ⊚, and a case in which the image quality is unobjectionable but there is slight unprinted region in the image and a minor quantity of fine bubbles is generated in the ink in the ink emitting head 27 is denoted by a circle mark ○. A case in which there is unprinted portion which detracts from the image quality and there is a minor quantity of fine bubbles in the ink in the ink emitting head 27 is denoted by a triangle mark Δ, and a case in which there is unprinted portion which detracts from the image quality and there is a large amount of fine bubbles generated in the ink in the ink emitting head 27 is denoted by a multiplication mark ×.

The optical density was measured as follows: The inks of the respective Examples and Comparative Examples were charged into the ink tanks and mounted on the head cartridge. All-over printing with respective colors was made on the copy sheet manufactured by MITSUBISHI SEISHI under the trade name of Mitsubishi-PPC. The reflective optical density pf the image generated was measured using an optical densitometer manufactured by MACBETH under the trade name of TR924.

The boundary bleeding was measured as follows: The inks of the Examples and Comparative Examples were charged into ink tanks which were then mounted on the head cartridge. All-over printing was then made on the copy sheet Mitsubishi-PPC manufactured by MITSUBISHI SEISHI, with a line ink jet printer apparatus, with the colors neighboring to one another on the printed copy sheet. The state of bleeding of the boundary portions of the respective colors was checked visually.

In table 3, a case in which there is no color bleeding in the boundary region is denoted by a double circle mark ⊚, and a case in which the image quality is unobjectionable but there is a minor quantity of bleeding of respective colors in the boundary region is denoted by a circle mark ○. A case in which there is color bleeding of respective colors in the boundary region which detracts from the image quality is denoted by a triangle mark Δ, and a case in which there is color bleeding of respective colors in the entire boundary region which severely detracts from the image quality is denoted by a multiplication mark ×.

The all-over color mixing and specking was evaluated as follows: The inks of the respective samples were charged into respective ink tanks and mounted on a head cartridge. All-over printing was made with the blue color on the copy sheet Mitsubishi-PPC manufactured by MITSUBISHI SEISHI, on the line ink jet printer apparatus, so that the colors were overlaid together. The printed image was visually checked for homogeneity of blue color density, that is, for possible color unevenness.

In the all-over color mixing and speckling in Table 3, an image all-over printed to a blue color, completely free from color unevenness, is denoted by a double circle mark ⊚, and an image unobjectionable in image quality but suffering only slight color unevenness is denoted by a circle mark ○. An image suffering color unevenness detracting from the image quality is denoted by a triangle mark Δ, and an image suffering in its entirety from color unevenness which severely detracts from the image quality is denoted by a multiplication mark ×.

It is seen from the results of evaluation, shown in Table 3, that the inks of Examples 1 to 8 are superior to the inks of the Comparative Examples 1 to 7 in all items of evaluation on emission stability, intermittent emission stability, optical density, boundary bleeding and all-over color mixing and speckling,

In the Comparative Example 1, containing only EOPOEO, it is not possible to suppress generation of fine bubbles in the ink sufficiently, thus lowering the emission stability. In the Comparative Example 1, not containing EBPD-EO, the wettability of the ink is not optimum and the ink has low wettability with respect to the recording paper sheet. Moreover, since the dynamic surface tension (γ₁) at 1 Hz is larger than 38 mN/m, boundary bleeding occurs, while the image suffers from color unevenness and optical density is lowered.

In the Comparative Example 2, not containing EOPOEO, it is not possible to suppress fine bubbles from being generated in the ink, with the result that bubbles generated stop up the nozzle to cause non-emission or emission defects to lower the emission stability. On the other hand, in the Comparative Example 2, the dynamic surface tension (γ₁) at 1Hz is larger than 38 mN/m, such that boundary bleeding and color unevenness in the image are produced, while optical density is lowered.

In the Comparative Example 3, containing neither EBPD-EO nor EOPOEO, fine bubbles cannot be suppressed from being generated in the ink, with the result that boundary bleeding or color unevenness in the image tends to be generated, with the result that evaluations on emission stability, boundary bleeding and all-over color mixing and specking are all low, while optical density is lowered.

In the Comparative Example 4, the EO content in the EOPOEO molecule is 43.1 wt%, which is more than 40 wt%, so that EOPOEO becomes hydrophilic and readily soluble in water as a solvent. Thus, fine bubbles cannot be suppressed from being generated in the ink. The ink is lowered in emission stability due to fine bubbles generated, while the image suffers from uneven colors.

In the Comparative Example 5, the EO content in EOPOEO is 18.9%, which is lower than 20%, with the result that the ink becomes turbid on heating the ink at the time of emission. Thus, the ink 2 is lowered in physical properties and unprinted portions tend to be produced, while emission stability of the ink is lowered.

In the Comparative Example 6, the total number of ethylene oxide units (m+n) in the molecules of EBPD-EO is 14, that is, larger than 10, with the result that of EBPD-EO becomes higher in hydrophilicity to lower the surface active performance. Moreover, fine bubbles are generated to lower the emission stability. In addition, in the Comparative Example 6, since the total number of the ethylene oxide units in the EBPD-EO and EOPOEO molecules is larger than 12, the ink 2 is not optimum in wettability. Thus, boundary bleeding tends to be generated or color unevenness is generated. The evaluations on boundary bleeding and all-over color mixing and specking are poor and optical density is lowered.

In Comparative Example 7, Olfine E100 used tends to foam and penetration performance with respect to the recording paper sheet is excessively high. Thus, with the Comparative Example 7, emission stability is lowered, while boundary bleeding and color unevenness tend to be generated, such that evaluations on boundary bleeding and all-over color mixing and speckling are low. Moreover, the Comparative Example 7 shows high a penetration performance into the recording paper sheet, with the result that optical density is lowered.

In the Examples 1 to 8, as compared to these Comparative Examples 1 to 7, the EBPD-EO, in which the total number of mols of EO added is not less than 1 and not higher than 10, and EOPOEO, with the total number of EO units being not less than 3 and ot more than 12, and with the content of the EO units in the molecule being not less than 20 wt% and not more than 40 wt%, are contained in the ink, so that fine bubbles may be prevented from being produced, while there is no fear of the nozzle being stopped up with bubbles. There is no fear of non-emission or emission defects, while emission stability may be higher. In addition, since EBPD-EO and EOPOEO are contained in the Examples 1 to 8, the ink may be optimum in wettability with respect to the inner surface of the ink emitting head or the recording paper sheet, while bubbles may be discharged readily. The as-printed image has high optical density and is free from boundary bleeding or color unevenness. In addition, the evaluation on boundary bleeding and all-over color mixing and specking is high.

Moreover, in the Examples 2 to 8, the dynamic surface tension (γ₂₀) is not less than 30 m/m and the dynamic surface tension (γ₁) is not more than 38 mN/m, and hence the ink is higher in wettability with reference to the recording paper sheet than the Example 1 with the dynamic surface tension (γ₁) is not more than 38 Nm/m. Hence, the ink has high optical density and free from boundary bleeding or color unevenness, so that evaluation boundary bleeding and all-over color mixing and specking is high.

As may be seen from above, the content in the ink of EBPD-EO, with the number of mols of EO added being not less than 1 and not more than 10, the content in the ink of EOPOEO, with the total number of EO units being not less than 3 and not more than 12, with the content of the EO units in the molecule being not less than 20 wt% and not more than 40 wt%, the dynamic surface tension (γ₂₀) of not less than 30 mN/m and the dynamic surface tension (γ₁) being not more than 38 mN/m, represent crucial factors in preparing the ink which will enable high quality printing of optimum emission stability and high optical density, which is free from boundary bleeding and which is suppressed in color unevenness.

The present invention is not to be restricted to the embodiments so far described with reference to the drawings. It is to be appreciated that those skilled in the art can change or modify the embodiments without departing from the scope and spirit of the invention.

## Claims

1. A recording liquid deposited on a support in the form of a liquid droplet to effect printing on said support, said recording liquid comprising:
a dye;
a solvent for dissolving or dispersing said dye therein; and
at least one of species of a compound shown by the chemical formula 1: 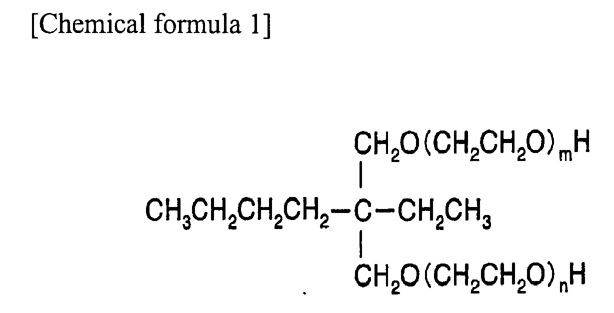
where m and n are each an integer from 0 to 10 and 1 ≤ m+n ≤ 10; and
at least one of species a compound shown by the chemical formula 2: 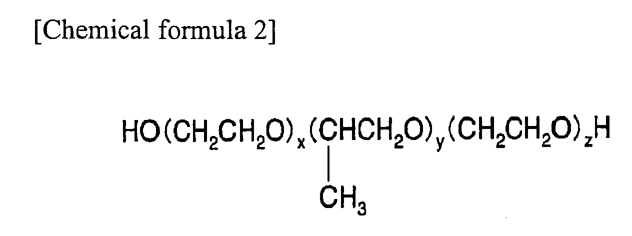 where x, y and z are each an integer such that 3 ≤ x+z ≤ 12 and 8 ≤ y ≤ 21 and the content of an ethylene oxide in the molecule is 20 to 40 wt%.

2. The recording liquid according to claim 1 wherein the dynamic surface tension thereof (γ₂₀) at 20 Hz is not less than 30 mN/m and wherein the dynamic surface tension thereof (γ₁) at 1 Hz is not less than 38 mN/m.

3. A liquid cartridge mounted on a liquid emitting head provided in a liquid emitting apparatus, said liquid emitting apparatus emitting a recording liquid as a liquid droplet and causing said liquid droplet to be deposited on a support to effect recording thereon, said liquid cartridge operating as a supply source for said recording liquid for said liquid emitting head; wherein said recording liquid comprises:
a dye;
a solvent for dissolving or dispersing said dye therein; and
at least one of species of a compound shown by the chemical formula 3: 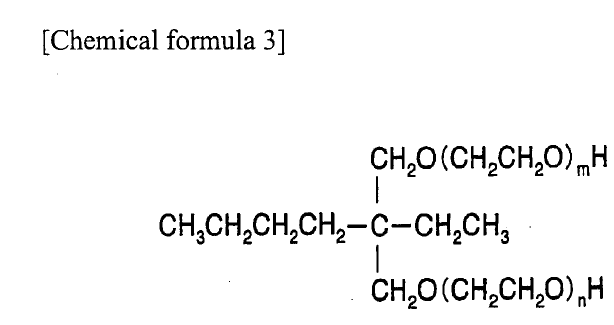
where m and n are each an integer from 0 to 10 and 1 ≤ m+n ≤ 10; and
at least one of species of a compound shown by the chemical formula 4: 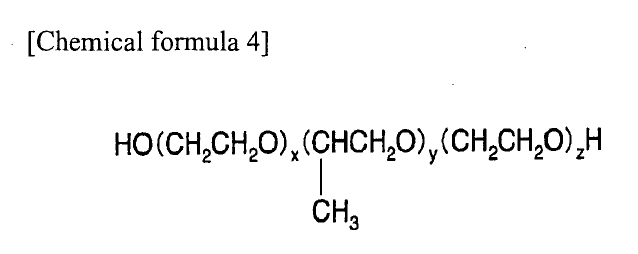 where x, y and z are each an integer such that 3 ≤ x+z ≤ 12 and 8 ≤ y ≤ 21 and the content of an ethylene oxide in the molecule is 20 to 40 wt%.

4. The liquid cartridge according to claim 3 wherein said recording liquid has the dynamic surface tension (γ₂₀) at 20 Hz of not less than 30 mN/m and the dynamic surface tension (γ₁) at 1 Hz of not less than 38 mN/m.

5. A liquid emitting apparatus comprising:
an apparatus proper;
a liquid emitting head provided on said apparatus proper; said ink emitting head including at least one liquid chamber for holding a recording liquid, a supply part for supplying said recording liquid to said liquid chamber, at least one pressurizing device provided in said liquid chamber for pressurizing said recording liquid held in said liquid chamber, and an emission port for emitting said recording liquid pressurized by said pressurizing device from said at least one liquid chamber in the form of a liquid droplet onto the major surface of said support; and
a liquid cartridge connected to said liquid emitting head for operating as a supply source for supplying said recording liquid to said supply part;
wherein
said recording liquid comprises:
a dye;
a solvent for dissolving or dispersing said dye therein; and
at least one of species of a compound shown by the chemical formula 5: 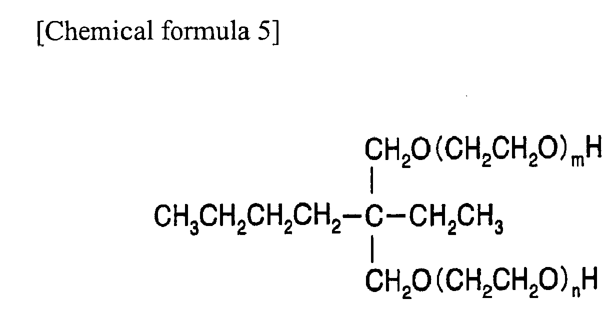
where m and n are each an integer from 0 to 10 and 1 ≤ m+n ≤ 10; and
at least one of species of a compound shown by the chemical formula 6: 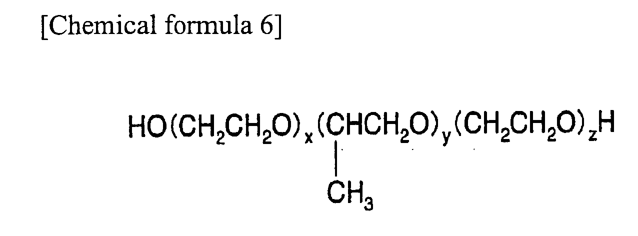 where x, y and z are each an integer such that 3 ≤ x+z ≤ 12 and 8 ≤ y ≤ 21 and the content of an ethylene oxide in the molecule is 20 to 40 wt%.

6. The liquid emitting apparatus according to claim 5 wherein said recording liquid has the dynamic surface tension (γ₂₀) at 20 Hz of not less than 30 mN/m and the dynamic surface tension (γ₁) at 1 Hz of not less than 38 mN/m.

7. A liquid emitting method by a liquid emitting apparatus comprising:
an apparatus proper;
a liquid emitting head provided on said apparatus proper; said ink emitting head including at least one liquid chamber for holding a recording liquid, a supply part for supplying said recording liquid to said liquid chamber, at least one pressurizing device provided in said liquid chamber for pressurizing said recording liquid held in said liquid chamber, and an emission port for emitting said recording liquid pressurized by said pressurizing device from said at least one liquid chamber in the form of a liquid droplet onto the major surface of said support; and
a liquid cartridge connected to said liquid emitting head for operating as a supply source for supplying said recording liquid to said supply part;
wherein
said method comprises emitting said recording liquid containing a dye, a solvent for dissolving or dispersing said dye therein, and at least one species of a compound shown by the chemical formula 7: 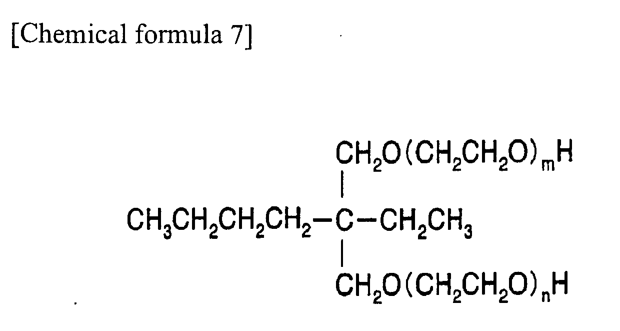 where m and n are each a integer from 0 to 10 and 1 ≤ m+n ≤ 10; and
at least one species of a compound shown by the chemical formula 8: 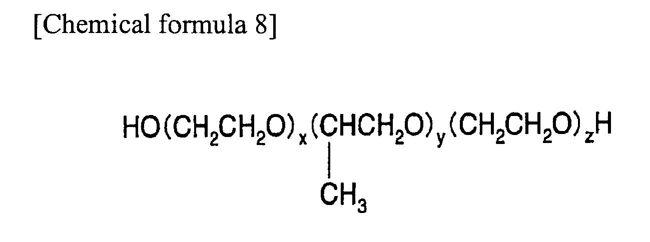 where x, y and z are each an integer such that 3 ≤ x+z ≤ 12 and 8 ≤ y ≤ 21 and the content of an ethylene oxide in the molecule is 20 to 40 wt%.

8. The liquid emitting method according to claim 7 wherein said recording liquid has the dynamic surface tension (γ₂₀) at 20 Hz of not less than 30 mN/m and the dynamic surface tension (γ₁) at 1 Hz of not less than 38 mN/m is emitted.
